# EUROPEAN PATENT SPECIFICATION

(11) **EP 3 825 587 B1**
(45) Date of publication and mention of the grant of the patent: **12.02.2025**
(21) Application number: 19837425.8
(22) Date of filing: 03.06.2019
(51) Int. Cl.: F16K 5/06, F16K 11/087, F16K 27/00, F16K 27/06

(54) **FLOW PASSAGE SWITCHING VALVE AND ASSEMBLY METHOD THEREFOR**
DURCHFLUSSUMSCHALTVENTIL UND MONTAGEVERFAHREN DAFÜR
VANNE DE COMMUTATION DE PASSAGE D'ÉCOULEMENT ET PROCÉDÉ D'ASSEMBLAGE ASSOCIÉ

(30) Priority: 17.07.2018 JP 2018134593; 06.12.2018 JP 2018229106
(43) Date of publication of application: 26.05.2021
(73) Proprietor: Fujikoki Corporation, Tokyo 158-0082 (JP); DENSO CORPORATION, Kariya-city, Aichi 448-8661 (JP)
(72) Inventor: KONDO Daisuke, Tokyo 158-0082 (JP); MOCHIZUKI Kenichi, Tokyo 158-0082 (JP); MANO Takamitsu, Kariya- city, Aichi 448-8661 (JP)
(74) Representative: Ter Meer Steinmeister & Partner
(86) International application number: PCT/JP2019/021960
(87) International publication number: WO 2020/017170

(56) References cited:
- EP-A1- 0 217 993
- CN-U- 203 797 046
- GB-A- 978 481
- JP-A- 2006 090 408
- JP-A- 2016 138 626
- JP-A- 2018 115 690
- JP-U- S5 710 370
- JP-U- S5 910 370
- JP-U- S56 109 467
- JP-U- S60 139 967
- No further relevant documents disclosed

## Description

### Technical Field

The present invention relates to a flow channel switching valve and relates to, for example, a flow channel switching valve that switches between flow channels by rotating a ball-like valve member (a ball valve member) in a valve chamber and a method for assembling the flow channel switching valve.

### Background Art

An example of an existing flow channel switching valve is disclosed in Patent Literature 1. The flow channel switching valve includes a ball valve member that includes an elastic body that has an inlet path and an outlet path, and a valve case that has a valve chamber in which a ball valve member is rotatably installed, an entrance flow channel in communication with the valve chamber, and exit flow channels in communication with the valve chamber. In the flow channel switching valve, rotation of the ball valve member enables the entrance flow channel to selectively communicate with any one of the exit flow channels.

As for the flow channel switching valve in Patent Literature 1, the ball valve member that includes the elastic body is directly supported by the valve case so as to be rotatable. As for another known flow channel switching valve, an annular resin seat member is interposed between a ball valve member and a valve case and rotatably supports the ball valve member. In the flow channel switching valve, the ball valve member is rotatably interposed between a pair of seat members, and the seat members are pressed against the ball valve member by interposing O-rings that are composed of, for example, a rubber material and that serve as sealing members between the seat members and the valve case in a compressed state to ensure sealing performance.

### Citation List

### Patent Literature

Patent Literature 1: JP 2010-223418 A

CN 203797046 U discloses a laterally-assembled type three-way ball valve which comprises a valve body, three flanges connected to the side face of the valve body, and a ball body and a valve seat which are arranged in the valve body. The valve body is a sphere with the top face and the bottom face both cut into planes. The valve body, a gland and two of the three flanges are of an integrated structure, and the valve body and the third flange are of a split structure; or, a valve deck which is of a split structure together with the valve body is arranged on the side face of the valve body, and the valve body, the gland and the three flanges are of an integrated structure. Two valve seat bosses in an inner cavity of the valve body are provided, as well as the tool for assembling the three-way ball valve.

### Summary of Invention

### Technical Problem

However, when the flow channel switching valve described above is assembled, it is necessary to interpose the ball valve member between the pair of the seat members and to push the sealing members in the compressed state into the valve chamber. Accordingly, it is difficult to insert these members into the valve chamber, and there is a problem with assembly precision, for example, the seat members are installed in the valve chamber with the seat members inclined.

In view of this, it is an object of the present invention to provide a flow channel switching valve that enables assembly precision to be effectively increased and a method for assembling the flow channel switching valve. Solution to Problem

To achieve the above object, a flow channel switching valve according to the present invention comprises the features of one of claims 1 or 2. A flow channel switching valve according to an aspect of the present invention includes a valve body that has a valve chamber and flow channels in communication with the valve chamber, a valve member that is installed in the valve chamber and that has a switching flow channel therein for switching between connections of the flow channels depending on a rotational position of the valve member, a pair of seat members that is installed in the valve chamber in an interval, that interposes the valve member therebetween, and that rotatably supports the valve member, a sealing member that is disposed between each seat member and the valve body, and a rotation driving section that causes the valve member to rotate about a rotation axis. The valve body is integrally provided with the flow channels. The valve body has an opening that is in communication with the valve chamber and that is used for inserting the valve member, the pair of seat members, and the sealing member during assembly. A size of the valve member in a direction of the rotation axis is smaller than a size thereof in a direction perpendicular to the rotation axis. A first jig mounting portion for rotating the valve member in the perpendicular direction is disposed on an inner wall surface of the valve member that is visible from a location outside the valve body through the opening or the flow channels.

In the present invention, a second jig mounting portion for rotating the valve member in the perpendicular direction may be disposed on the inner wall surface of the valve member that is visible from a location outside the valve body through the opening or the flow channels.

In the present invention, the size of the valve member in the direction of the rotation axis is smaller than the size thereof in the direction perpendicular to the rotation axis such that the sealing member is in a compressed state when the valve member has a support posture with the rotation axis being perpendicular to an opposing direction of the pair of seat members, and such that the sealing member is in a restoration state when the valve member has an assembly posture with the rotation axis being parallel to the opposing direction.

In the present invention, the jig mounting portion preferably has a recessed portion or a projecting portion that has a regular hexagonal shape.

According to one aspect of the present invention, the valve member has three valve member openings that face in the direction perpendicular to the rotation axis and that are connected to each other by using the switching flow channel, the three valve member openings are arranged about the rotation axis in an interval of 90 degrees, and diameters of two valve member openings opposite each other with the rotation axis interposed therebetween among the three valve member openings are smaller than a diameter of the other valve member opening.

According to another aspect of the present invention, the valve member has two valve member openings that face in the direction perpendicular to the rotation axis and that are connected to each other by using the switching flow channel, the two valve member openings are arranged about the rotation axis in an interval of 90 degrees, and a diameter of one valve member opening of the two valve member openings is smaller than a diameter of the other valve member opening.

To achieve the above object, a method for assembling a flow channel switching valve comprises the features of claims 7 or 8. A method according to another aspect of the present invention is a method for assembling a flow channel switching valve that includes a valve body that has a valve chamber and flow channels in communication with the valve chamber, a valve member that is installed in the valve chamber and that has a switching flow channel therein for switching between connections of the flow channels depending on a rotational position of the valve member, a pair of seat members that is installed in the valve chamber in an interval, that interposes the valve member therebetween, and that rotatably supports the valve member, and a sealing member that is disposed between each seat member and the valve body, the valve body being integrally provided with the flow channels, and the valve body having an opening that is in communication with the valve chamber and that is used for inserting the valve member, the pair of seat members, and the sealing member during assembly, the pair of seat members rotatably supporting the valve member such that an assembly posture with a rotation axis of the valve member being parallel to an opposing direction of the pair of seat members changes into a support posture with the rotation axis being perpendicular to the opposing direction, the pair of seat members supporting the valve member that has the support posture such that the valve member is rotatable about the rotation axis, a size of the valve member in a direction of the rotation axis being smaller than a size thereof in a direction perpendicular to the rotation axis such that the seat members, the sealing member, or both are in a compressed state when the valve member has the support posture, and the seat members, the sealing member, or both are restored from the support posture when the valve member has the assembly posture, a first jig mounting portion that is configured such that the first jig mounting portion and a tip end portion of a rod-shaped jig fit together, and such that the valve member is rotated from the assembly posture into the support posture together with rotation of the rod-shaped jig being disposed on an inner wall surface of the valve member that is visible in a direction perpendicular to the opposing direction from a location outside the valve body through the opening or the flow channels when the valve member has the assembly posture. The method includes installing the pair of seat members and the sealing member in the valve chamber and disposing the valve member between the pair of seat members such that the valve member has the assembly posture, inserting the rod-shaped jig in the direction perpendicular to the opposing direction through the opening or the flow channels and fitting a tip end portion thereof and the first jig mounting portion together, and rotating the rod-shaped jig and rotating the valve member from the assembly posture into the support posture.

In the present invention, the pair of seat members may support the valve member that has the support posture such that the valve member is rotatable about a perpendicular axis parallel to the opposing direction, a second jig mounting portion that is configured such that the second jig mounting portion and the tip end portion of the rod-shaped jig fit together and such that the valve member is rotated about the perpendicular axis together with rotation of the rod-shaped jig may be disposed on the inner wall surface of the valve member that is visible in the opposing direction from a location outside the valve body through the opening or the flow channels when the valve member has the support posture, the rod-shaped jig may be inserted in the opposing direction through the flow channels, the tip end portion thereof and the second jig mounting portion may be fit together, the rod-shaped jig may be rotated, and the valve member may be rotated about the perpendicular axis. Advantageous Effects of Invention

According to the present invention, the size of the valve member in the direction of the rotation axis is smaller than the size thereof in the direction perpendicular to the rotation axis. The first jig mounting portion for rotating the valve member in the perpendicular direction is disposed on the inner wall surface of the valve member that is visible from a location outside the valve body through the opening or the flow channels. This enables the interval between the pair of seat members to be increased in a manner in which the valve member is interposed between the pair of seat members in the direction of the rotation axis, the valve member, the pair of seat members, and the sealing member are installed in the valve chamber through the opening of the valve body, and the valve member is subsequently rotated in the perpendicular direction by using the first jig mounting portion. For this reason, assembly can be more accurate than the case where the valve member is interposed between the pair of seat members in the direction perpendicular to the rotation axis.

In addition, according to the present invention, the pair of seat members and the sealing member are installed in the valve chamber, and the valve member is disposed between the pair of seat members such that the valve member has the assembly posture, during the assembly of the flow channel switching valve. The rod-shaped jig is inserted in the direction perpendicular to the opposing direction through the opening or the flow channels of the valve body, the tip end portion thereof and the first jig mounting portion are fit together. The rod-shaped jig is rotated, and the valve member is rotated from the assembly posture into the support posture. This enables the seat members and the sealing member to be in the compressed state in a manner in which the valve member, the pair of seat members, and the sealing member are installed in the valve chamber in a state in which the degree of compression of the sealing member is relatively low, and the valve member is subsequently rotated from the assembly posture into the support posture by using the rod-shaped jig. For this reason, the assembly can be more accurate than the case where the sealing member in the compressed state is pushed into the valve chamber.

In addition, since the first jig mounting portion is disposed on the inner wall surface of the valve member, the jig mounting portion and the seat members do not interfere with each other. For this reason, a jig mounting portion that has a projecting shape, for example, can be used, and the degree of freedom of the structure of the jig mounting portion is higher than that of a structure in which the jig mounting portion is disposed on an outer surface of the valve member. Furthermore, even when foreign substances accumulate on a jig mounting portion that has a recessed shape, the foreign substances do not come into contact with the seat members, and the seat members can be inhibited from being damaged due to the foreign substances.

### Brief Description of Drawings

[Fig. 1] Fig. 1 illustrates a front view of a flow channel switching valve according to a first embodiment of the present invention.
[Fig. 2] Fig. 2 illustrates a vertical cross-sectional view of the flow channel switching valve in Fig. 1.
[Fig. 3] Fig. 3 illustrates a cross-sectional view taken along line A-A in Fig. 2.
[Fig. 4] Fig. 4 illustrates a perspective view containing a section of the flow channel switching valve in Fig. 1.
[Fig. 5] Fig. 5 illustrates a view of six sides of a ball valve member that the flow channel switching valve in Fig. 1 includes.
[Fig. 6] Fig. 6 illustrates a method for assembling the flow channel switching valve in Fig. 1 and illustrates a state before the ball valve member, seat members, and sealing members are inserted into a valve body.
[Fig. 7] Fig. 7 illustrates the method for assembling the flow channel switching valve in Fig. 1 and illustrates a state in which the ball valve member, the seat members, and the sealing members are inserted in the valve body, and the ball valve member has an assembly posture.
[Fig. 8] Fig. 8 illustrates the method for assembling the flow channel switching valve in Fig. 1 and illustrates a state in which the ball valve member is rotated from the assembly posture into a support posture in a valve chamber.
[Fig. 9] Fig. 9 illustrates the method for assembling the flow channel switching valve in Fig. 1 and illustrates a state before a driving section is joined to the valve body.
[Fig. 10] Fig. 10 illustrates a front view of a flow channel switching valve according to a second embodiment of the present invention.
[Fig. 11] Fig. 11 illustrates a vertical cross-sectional view of the flow channel switching valve in Fig. 10.
[Fig. 12] Fig. 12 illustrates a cross-sectional view taken along line B-B in Fig. 11.
[Fig. 13] Fig. 13 illustrates a perspective view containing a section of the flow channel switching valve in Fig. 10.
[Fig. 14] Fig. 14 illustrates a view of six sides of a ball valve member that the flow channel switching valve in Fig. 10 includes.
[Fig. 15] Fig. 15 illustrates a method for assembling the flow channel switching valve in Fig. 10 and illustrates a state before the ball valve member, the seat members, and the sealing members are inserted into the valve body.
[Fig. 16] Fig. 16 illustrates the method for assembling the flow channel switching valve in Fig. 10 and illustrates a state in which the ball valve member, the seat members, and the sealing members are inserted in the valve body, and the ball valve member has the assembly posture.
[Fig. 17] Fig. 17 illustrates the method for assembling the flow channel switching valve in Fig. 10 and illustrates a state in which the ball valve member is rotated from the assembly posture into the support posture in the valve chamber.
[Fig. 18] Fig. 18 illustrates the method for assembling the flow channel switching valve in Fig. 10 and illustrates a state in which the ball valve member that has the support posture is rotated about a perpendicular axis in the valve chamber.
[Fig. 19] Fig. 19 illustrates the method for assembling the flow channel switching valve in Fig. 10 and illustrates a state before the driving section is joined to the valve body.
[Fig. 20] Fig. 20 illustrates a state before mold pieces are inserted into a cavity of a mold that is used for manufacturing the ball valve member.
[Fig. 21] Fig. 21 illustrates a state after the mold pieces are inserted into the cavity of the mold that is used for manufacturing the ball valve member.

### Description of Embodiments

### (First Embodiment)

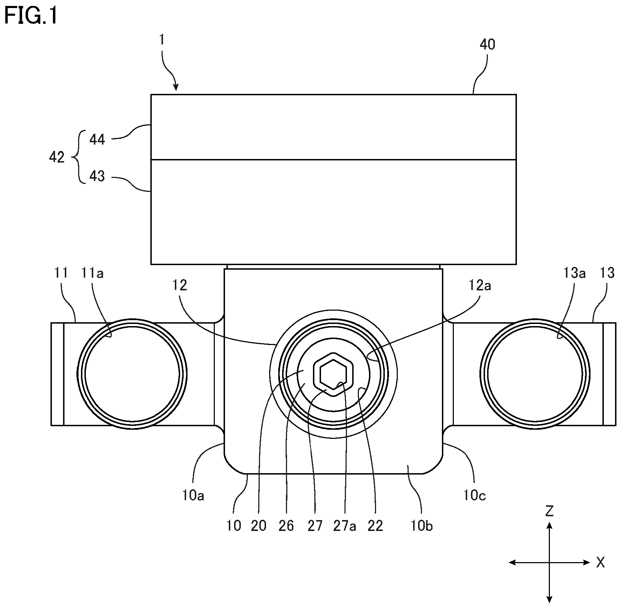

The structure of a flow channel switching valve according to a first embodiment of the present invention will now be described with reference to Fig. 1 to Fig. 5.

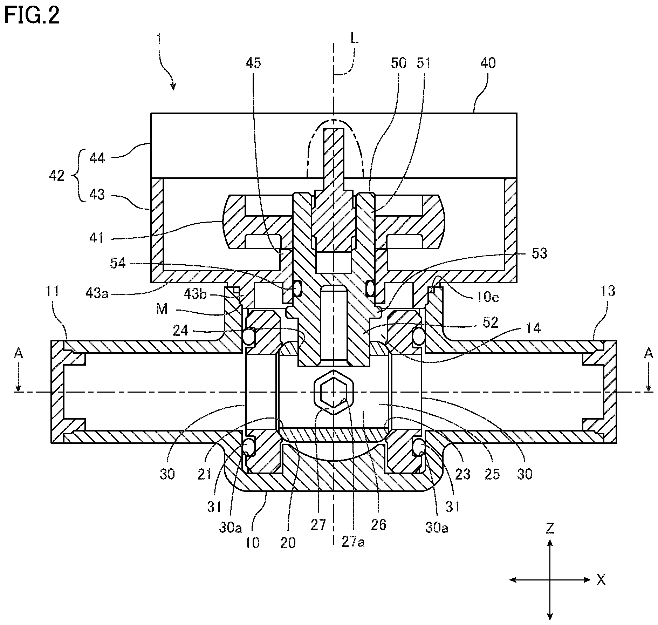

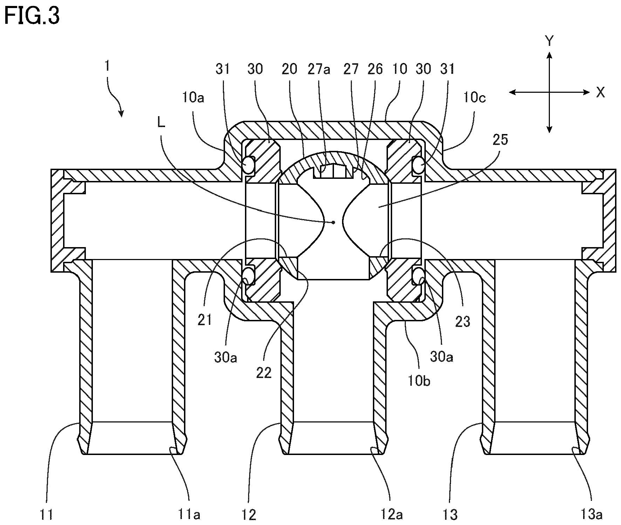

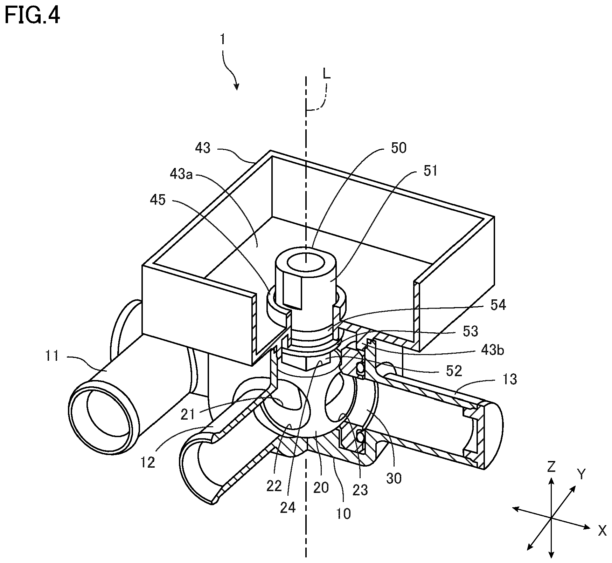

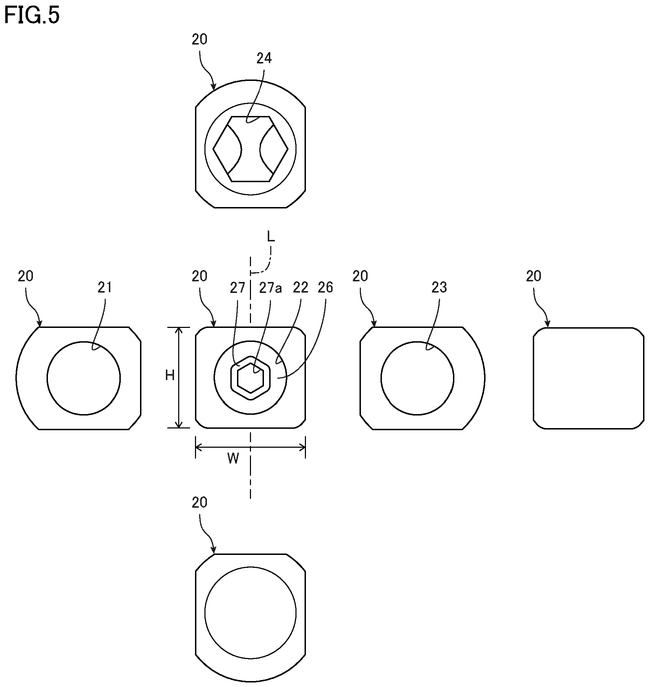

Fig. 1 illustrates a front view of the flow channel switching valve according to the first embodiment of the present invention. Fig. 2 illustrates a cross-sectional view (a vertical cross-sectional view) of the flow channel switching valve in Fig. 1 taken along a rotation axis. Fig. 3 is a cross-sectional view taken along line A-A in Fig. 2. Fig. 4 illustrates a perspective view containing a section of the flow channel switching valve in Fig. 1. Fig. 5 illustrates a view of six sides of a ball valve member that the flow channel switching valve in Fig. 1 includes. In the following description, the terms "upper, lower, left, and right" are used to represent relative positional relationships of components in the figures and do not represent absolute positional relationships. In the drawings, an X-axis direction represents a left-and-right direction, a Y-axis direction represents a front-and-rear direction, and a Z-axis direction represents an up-and-down direction. An X-axis, a Y-axis, a Z-axis are perpendicular to each other.

As illustrated in Fig. 1 to Fig. 5, a flow channel switching valve 1 according to the present embodiment includes a valve body 10, a ball valve member 20, a pair of seat members 30, sealing members 31, a driving section 40 that serves as a rotation driving section, and a valve shaft 50.

The valve body 10 is composed of synthetic resin and has a substantially cubic box shape. A first flow channel 11 that has a substantially L-shape is provided on a left side wall portion 10a of the valve body 10. A second flow channel 12 that is linear is provided on a front wall portion 10b of the valve body 10. A third flow channel 13 that has a substantially L-shape is provided on a right side wall portion 10c of the valve body 10. An opening 11a in the first flow channel 11, an opening 12a in the second flow channel 12, and an opening 13a in the third flow channel 13 face in the same direction (a front direction, or a forward direction from the paper in Fig. 1). The first flow channel 11, the second flow channel 12, and the third flow channel 13 are in communication with a valve chamber 14 that is provided in the valve body 10. Two flow channels or four or more flow channels in communication with the valve chamber 14 may be provided. In the present embodiment, the second flow channel 12 extends in the Y-axis direction. The valve body 10 has an opening 10e in communication with the valve chamber 14. The opening 10e faces upward.

The seat members 30 are composed of, for example, synthetic resin such as polytetrafluoroethylene (PTFE) and have an annular shape. The seat members 30 may be composed of an elastic material such as a rubber material. The seat members 30 are paired with each other and are installed in the valve chamber 14 so as to face each other in an interval in the X-axis direction. The X-axis direction coincides with an opposing direction of the seat members 30 (also referred to below as an "opposing direction X"). The seat members 30 interpose and rotatably support the ball valve member 20 that will be described later in the valve chamber 14.

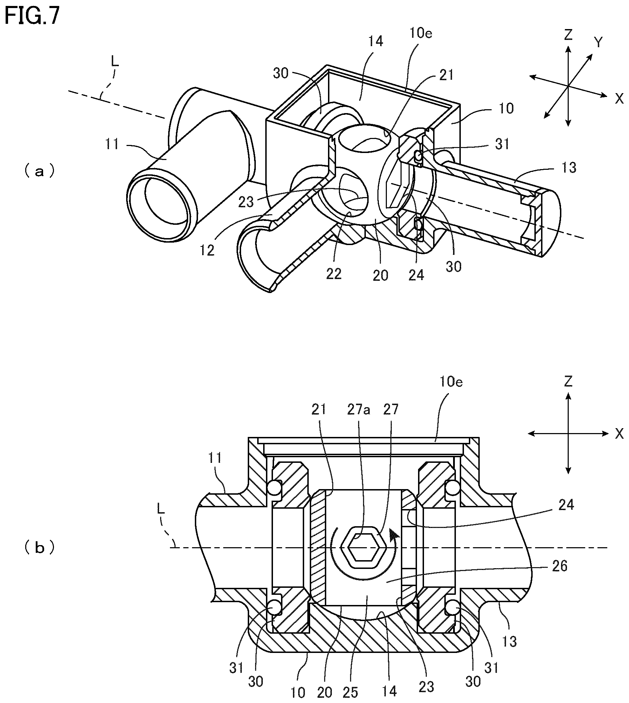

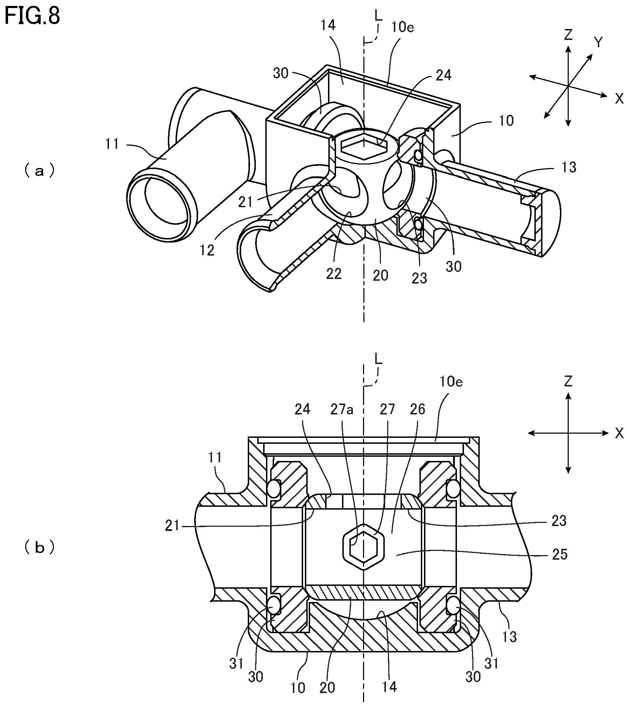

Specifically, the seat members 30 rotatably support the ball valve member 20 such that an assembly posture (Fig. 7) with an axis L that represents the rotation axis of the ball valve member 20 being parallel to the opposing direction X changes into a support posture (Fig. 8) with the axis L being parallel to the Z-axis direction perpendicular to the opposing direction X during the assembly of the flow channel switching valve 1. The seat members 30 also support the ball valve member 20 that has the support posture such that the ball valve member 20 is rotatable about the axis L (the Z-axis) at the time of completion of the assembly of the flow channel switching valve 1 (that is, a completion state in which the flow channel switching valve can operate). The structure of each seat member 30 is freely determined provided that the ball valve member 20 is interposed therebetween and is rotatably supported unless it goes against the purpose of the present invention.

The sealing members 31 are, for example, O-rings composed of an elastic material such as a rubber material, one of which is interposed between one of the seat members 30 and the left side wall portion 10a of the valve body 10 so as to be in a compressed state, and the other of which is interposed between the other seat member 30 and the right side wall portion 10c of the valve body 10 so as to be in the compressed state. In the present embodiment, the sealing members 31 are fitted in annular grooves 30a that the seat members 30 have and partly project from the annular grooves 30a. The sealing members 31 seal a space between the valve body 10 and the ball valve member 20 together with the seat members 30. It is a matter of course that members obtained by integrating the seat members 30 and the sealing members 31 may be used.

The ball valve member 20 is composed of, for example, a material such as metal or synthetic resin and has a hollow ball-like shape (a spherical shape). The ball valve member 20 is rotatably supported by the seat members 30 and is installed in the valve chamber 14. The ball valve member 20 has a first opening 21 that opens in the left-hand direction, a second opening 22 that opens in the front direction (downward in Fig. 3), and a third opening 23 that opens in the right-hand direction when being located at a rotational position illustrated in Fig. 3. A switching flow channel 25 that has a substantially T-shape in a plan view and that connects the first opening 21, the second opening 22, and the third opening 23 to each other is provided in the ball valve member 20. For example, the ball valve member 20 may have only the first opening 21 and the second opening 22, and the switching flow channel 25 may have a substantially L-shape in a plan view and may connect the first opening 21 and the second opening 22 to each other. In the present embodiment, the ball valve member 20 is used as the valve member, but a columnar valve member may be used.

The first opening 21, the second opening 22, and the third opening 23 in the ball valve member 20 are three valve member openings that face in the direction perpendicular to the axis L and are connected to each other by using the switching flow channel 25. The first opening 21, the second opening 22, and the third opening 23 are arranged about the axis L in an interval of 90 degrees. For example, when the second opening 22 faces in the Y-axis direction, the first opening 21 and the third opening 23 face in opposite directions parallel to the X-axis direction. In the present embodiment, the first opening 21, the second opening 22, and the third opening 23 have a circular shape (including a substantially circular shape) and have the same diameter.

The switching flow channel 25 is formed such that connections among the first flow channel 11, the second flow channel 12, and the third flow channel 13 are switched depending on the rotational position of the ball valve member 20. Specifically, the switching flow channel 25 connects the first flow channel 11, the second flow channel 12, and the third flow channel 13 to each other when the ball valve member 20 is located at the rotational position illustrated in Fig. 3. The switching flow channel 25 connects the first flow channel 11 and the second flow channel 12 to each other when the ball valve member 20 is located at the rotational position at which the ball valve member 20 is rotated 90 degrees clockwise in a plan view from the rotational position illustrated in Fig. 3. The switching flow channel 25 connects the second flow channel 12 and the third flow channel 13 to each other when the ball valve member 20 is located at the rotational position at which the ball valve member 20 is rotated 90 degrees counterclockwise in a plan view from the rotational position illustrated in Fig. 3.

A valve shaft insertion hole 24 in which the valve shaft 50 described later is inserted is provided in an upper portion of the ball valve member 20. The valve shaft insertion hole 24 is formed such that the ball valve member 20 is rotated about the axis L together with rotation of the valve shaft 50 with the valve shaft 50 inserted therein. Specifically, the valve shaft insertion hole 24 has the same shape as a cross-sectional shape (a transverse cross-sectional shape) of a prism portion 52 of the valve shaft 50 in the direction perpendicular to the rotation axis. In the present embodiment, the valve shaft insertion hole 24 has a regular hexagonal shape.

The size H of the ball valve member 20 in the direction of the axis L is smaller than the size W thereof in the direction perpendicular to the axis L (H < W) such that the sealing members 31 are in a restoration state (a state in which no force is applied from the outside, and there is no elastic deformation) when the ball valve member 20 has the assembly posture (Fig. 7) with the axis L being parallel to the X-axis direction (the opposing direction X), and such that the sealing members 31 are in the compressed state when the ball valve member 20 has the support posture (Fig. 8) with the axis L being parallel to the Z-axis direction (the direction perpendicular to the opposing direction X). In this case, when the ball valve member 20 has the assembly posture in the valve chamber 14, the sealing members 31 are in the restoration state. Accordingly, the ball valve member 20, the seat members 30, and the sealing members 31 can be inserted into the valve chamber 14 without press-fitting. When the ball valve member 20 has the support posture in the valve chamber 14, the sealing members 31 are in the compressed state. Accordingly, the seat members 30 are pressed against the ball valve member 20, and the space between the ball valve member 20 and the valve body 10 is sealed. It is only necessary for the size H of the ball valve member 20 in the direction of the axis L to be smaller than the size W thereof in the direction perpendicular to the axis such that the sealing members 31 are in the compressed state when the ball valve member 20 has the support posture, and such that the sealing members 31 are restored from the support posture when the ball valve member 20 has the assembly posture.

A jig mounting portion 27 is disposed on an inner wall surface 26 of the ball valve member 20 opposite the second opening 22. The jig mounting portion 27 has a projecting shape of a substantially regular hexagonal prism that projects toward the second opening 22, and a recessed portion 27a that has a regular hexagonal shape is disposed on a tip end surface. In the present embodiment, the recessed portion 27a is configured such that the recessed portion 27a and a tip end portion of a hexagonal wrench that serves as a rod-shaped jig fit together. The recessed portion 27a may be configured such that the recessed portion 27a and a tip end portion of a cross-head screwdriver or a flat head screwdriver that serves as the rod-shaped jig fit together. The jig mounting portion 27 may be configured to be a projecting portion that is fitted in a socket wrench. The cost of the rod-shaped jig can be decreased by matching the shape of the jig mounting portion 27 to the shape of, for example, a commercially available hexagonal wrench. The jig mounting portion 27 corresponds to a first jig mounting portion.

When the ball valve member 20 is disposed in the valve chamber 14 so as to have the assembly posture, the second flow channel 12, the second opening 22, and the inner wall surface 26 can be linearly aligned. In the case of the assembly posture, the jig mounting portion 27 on the inner wall surface 26 is visible in the Y-axis direction perpendicular to the opposing direction X from a location outside the valve body 10 through the second flow channel 12 and the switching flow channel 25.

The driving section 40 includes a driving mechanism that includes a combination of a motor, not illustrated, and a speed reducer that includes a gear 41, and a driving section case 42 composed of resin in which the driving mechanism is installed. The driving section case 42 has a substantially rectangular parallelepiped box shape. The driving section case 42 includes a lower case 43 and an upper case 44. The lower case 43 and the upper case 44 are assembled by using an attachment structure, not illustrated, such as a screw structure or a snap-fit structure.

The lower case 43 includes a cylindrical bearing portion 45 that is integrated therewith at the center of a bottom wall 43a. The valve shaft 50 is inserted in the bearing portion 45, and the bearing portion 45 rotatably supports the valve shaft 50. A rib 43b that is disposed on the bottom wall 43a of the lower case 43 is assembled with an upper end portion of the valve body 10 (a valve body 110 in a second embodiment described later), and these are joined to each other at a weld portion M (by ultrasonic welding in the present embodiment). The lower case 43 and the valve body 10 may be assembled with each other by using a screw structure or the like.

The valve shaft 50 has a columnar shape that linearly extends overall and includes a round columnar portion 51 and the prism portion 52 that is coaxially connected to the lower end of the round columnar portion 51. The valve shaft 50 extends in the Z-axis direction.

A stopper portion 53 that extends outward in the radial direction and that has an annular shape is disposed on a lower end portion of the round columnar portion 51. The outer diameter of the stopper portion 53 is larger than the outer diameter of the round columnar portion 51 and the inner diameter of the bearing portion 45.

A groove is provided on the lower end portion of the round columnar portion 51 over the entire circumference at a position higher than the stopper portion 53, and an O-ring 54 that is composed of, for example, a rubber material and that as an annular shape is fitted in the groove. The round columnar portion 51 is inserted in the bearing portion 45 and is rotatably supported by the bearing portion 45. The outer diameter of the round columnar portion 51 is slightly smaller than the inner diameter of the bearing portion 45, and the O-ring 54 seals a gap between the valve shaft 50 and the bearing portion 45 when the round columnar portion 51 is inserted in the bearing portion 45. This prevents a fluid in the valve chamber 14 from leaking to the outside.

The gear 41 of the drive portion 40 is secured to and mounted on an upper end portion of the round columnar portion 51 by press-fitting, and the valve shaft 50 is rotated together with rotation of the gear 41. A flat portion that inhibits the press-fitted gear 41 from slipping is disposed on the upper end portion of the round columnar portion 51.

The prism portion 52 has a columnar shape a transverse cross-sectional shape of which is a regular hexagonal shape. The prism portion 52 is inserted in the valve shaft insertion hole 24 of the ball valve member 20. In this state, the rotation axis of the valve shaft 50 coincides with the axis L of the ball valve member 20. The valve shaft insertion hole 24 has a regular hexagonal shape a transverse cross-sectional shape of which is the same as that of the prism portion 52. For this reason, the valve shaft insertion hole 24 and the prism portion 52 fit together, and the ball valve member 20 is rotated about the axis L together with rotation of the valve shaft 50. The outer diameter of the prism portion 52 is smaller than that of the stopper portion 53.

The prism portion 52 may have a polygonal columnar shape such as a triangular prism shape or a quadrangular prism shape, or a columnar having a D-shaped cross-section having a plane on a part of the circumferential surface, in addition to a regular hexagonal shape. In this case, the valve shaft insertion hole 24 has the same shape as the transverse cross-sectional shape of the prism portion 52.

As for the flow channel switching valve 1, rotation of the motor of the driving section 40 is transmitted to the valve shaft 50 via the gear 41, and the valve shaft 50 is rotated. The ball valve member 20 is rotated about the axis L parallel to the Z-axis direction together with rotation of the valve shaft 50 and moves to each of the rotational positions. This achieves connections of the flow channels depending each of the rotational positions.

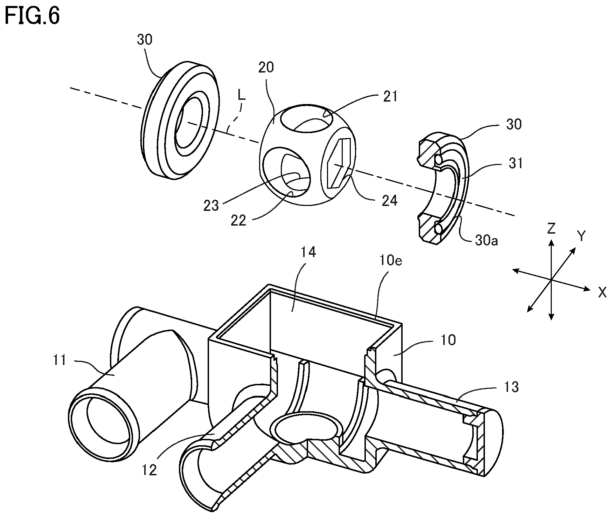

An example of a method for assembling the flow channel switching valve 1 according to the present embodiment will now be described with reference to Fig. 6 to Fig. 9.

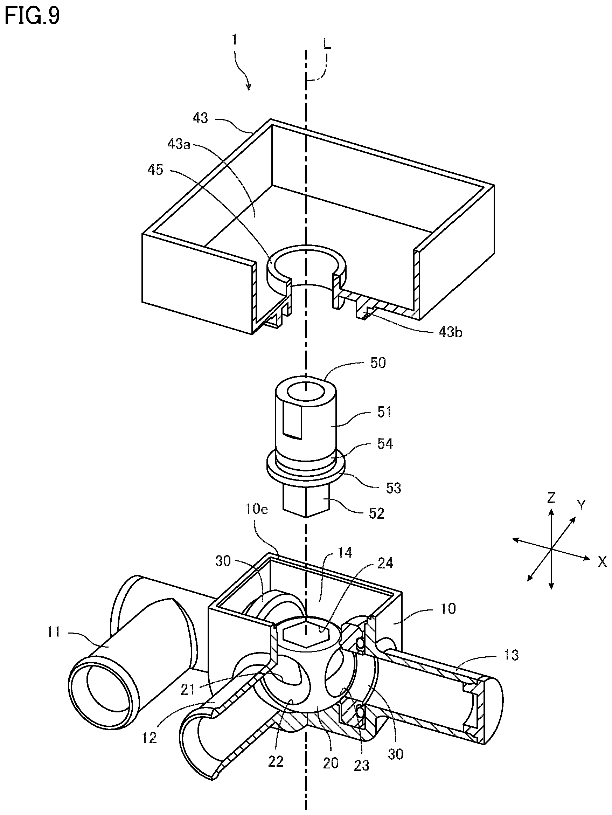

Fig. 6 to Fig. 9 illustrate the method for assembling the flow channel switching valve in Fig. 1. Specifically, Fig. 6 is an exploded perspective view illustrating a state before the ball valve member 20, the seat members 30, and the sealing members 31 are inserted into the valve body 10. Fig. 7 illustrates a state in which the ball valve member 20, the seat members 30, and the sealing members 31 are inserted in the valve body 10, and the ball valve member 20 has the assembly posture with the axis L being parallel to the X-axis direction. Fig. 8 illustrates a state in which the ball valve member 20 is rotated from the assembly posture with the axis L being parallel to the X-axis direction into the support posture with the axis L being parallel to the Z-axis direction in the valve chamber 14. Fig. 9 is an exploded perspective view illustrating a state before the driving section is joined to the valve body 10. In Fig. 7 and Fig. 8, perspective views each containing a section are illustrated at (a), and enlarged vertical cross-sectional views are illustrated at (b).

As illustrated in Fig. 6, the ball valve member 20 is first disposed such that the axis L is parallel to the X-axis direction, and the second opening 22 faces in the front direction. The ball valve member 20 is interposed between the seat members 30 in the X-axis direction (the opposing direction X). The sealing members 31 are fitted into the annular grooves 30a of the seat members 30. As illustrated in Fig. 7, the ball valve member 20, the seat members 30, and the sealing members 31 are inserted into the valve chamber 14 through the opening 10e of the valve body 10 with these being in contact with each other. At this time, the ball valve member 20 has the assembly posture with the axis L being parallel to the opposing direction X, and the sealing members 31 are in the restoration state in the valve chamber 14. For this reason, the sealing members 31 do not elastically deform, and the ball valve member 20, the seat members 30, and the sealing members 31 can be smoothly installed in the valve chamber 14. The second flow channel 12, the second opening 22, and the inner wall surface 26 are linearly arranged in the Y-axis direction, and the jig mounting portion 27 is visible in the Y-axis direction from a location outside the valve body 10 through the second flow channel 12 and the switching flow channel 25.

Subsequently, the hexagonal wrench, not illustrated, which serves as the rod-shaped jig, is inserted in the Y-axis direction into the second opening 22 through the second flow channel 12 in a state illustrated in Fig. 7, and the tip end portion thereof and the recessed portion 27a of the jig mounting portion 27 are fit together. The ball valve member 20 is rotated in the direction (about the Y-axis direction) perpendicular to the axis L by rotating the hexagonal wrench in the counterclockwise direction illustrated by an arrow in Fig. 7(b). As illustrated in Fig. 8, the axis L of the ball valve member 20 is matched to the Z-axis direction, and the posture becomes the support posture. In this case, since the size W of the ball valve member 20 in the direction perpendicular to the direction of the axis L is larger than the size H thereof in the direction of the axis L (H < W), when the assembly posture of the ball valve member 20 changes into the support posture, the interval between the seat members 30 widens, and the state of the sealing members 31 changes from the restoration state into the compressed state. The seat members 30 support the ball valve member 20 that has the support posture such that the ball valve member 20 is rotatable about the axis L parallel to the Z-axis direction. In the present description, to rotate in the direction perpendicular to the axis L means to rotate about a straight line parallel to the direction perpendicular to the axis L with the straight line coinciding with the rotation axis.

Subsequently, the prism portion 52 of the valve shaft 50 is inserted into the valve shaft insertion hole 24 of the ball valve member 20 that has the support posture and that is installed in the valve chamber 14, the round columnar portion 51 of the valve shaft 50 is inserted into the bearing portion 45, and the valve body 10 and the lower case 43 of the driving section case 42 are combined. The lower case 43 is exposed to ultrasonic, and the lower case 43 is welded to the valve body 10 by ultrasonic welding. The driving mechanism is incorporated with the lower case 43, for example, by press-fitting the gear 41 to the round columnar portion 51 of the valve shaft 50 and is covered with the upper case 44, the driving section 40 is assembled, and the flow channel switching valve 1 is completed.

As for the flow channel switching valve 1 according to the present embodiment described above, the seat members 30 and the sealing members 31 are installed in the valve chamber 14 during the assembly of the flow channel switching valve 1, and the ball valve member 20 is disposed between the seat members 30 so as to have the assembly posture. The rod-shaped jig is inserted in the Y-axis direction perpendicular to the opposing direction X through the second flow channel 12 of the valve body 10, and the tip end portion thereof and the recessed portion 27a of the jig mounting portion 27 are fit together. The rod-shaped jig is rotated, and the ball valve member 20 is rotated from the assembly posture into the support posture. In this way, the state of the sealing members 31 can be changed from the restoration state into the compressed state in a manner in which the ball valve member 20, the seat members 30, and the sealing members 31 are installed in the valve chamber 14 with the sealing members 31 being in the restoration state, and the ball valve member 20 is subsequently rotated from the assembly posture into the support posture by using the rod-shaped jig. For this reason, the assembly is more accurate than the case where the sealing members 31 in the compressed state are pushed into the valve chamber.

In addition, since the jig mounting portion 27 is disposed on the inner wall surface 26 of the ball valve member 20, the jig mounting portion 27 and the seat members 30 do not interfere with each other. For this reason, the jig mounting portion 27 that has a projecting shape can be used, and the degree of freedom of the structure of the jig mounting portion 27 is higher than that of a structure in which the jig mounting portion 27 is disposed on an outer surface of the ball valve member 20. Furthermore, even when foreign substances accumulate on the recessed portion 27a of the jig mounting portion 27, the foreign substances do not come into contact with the seat members 30, and the seat members 30 can be inhibited from being damaged due to the foreign substances.

### (Second Embodiment)

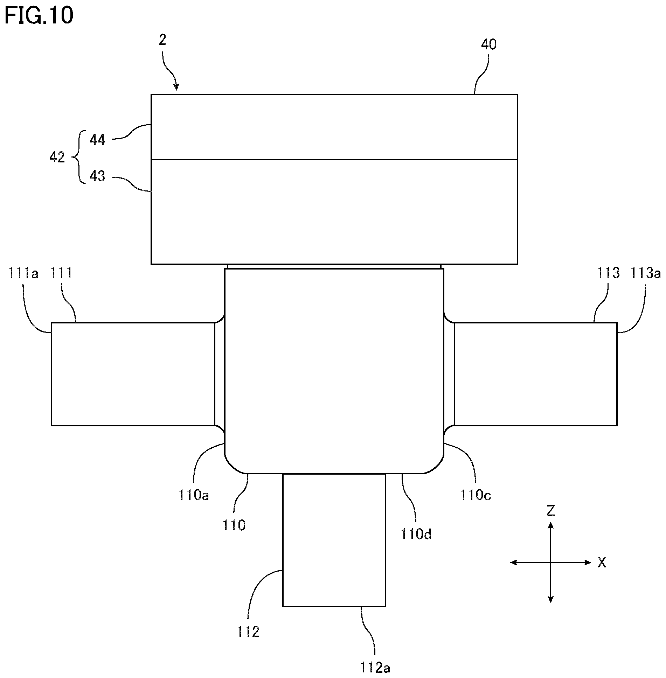

The structure of a flow channel switching valve according to a second embodiment of the present invention will now be described with reference to Fig. 10 to Fig. 14.

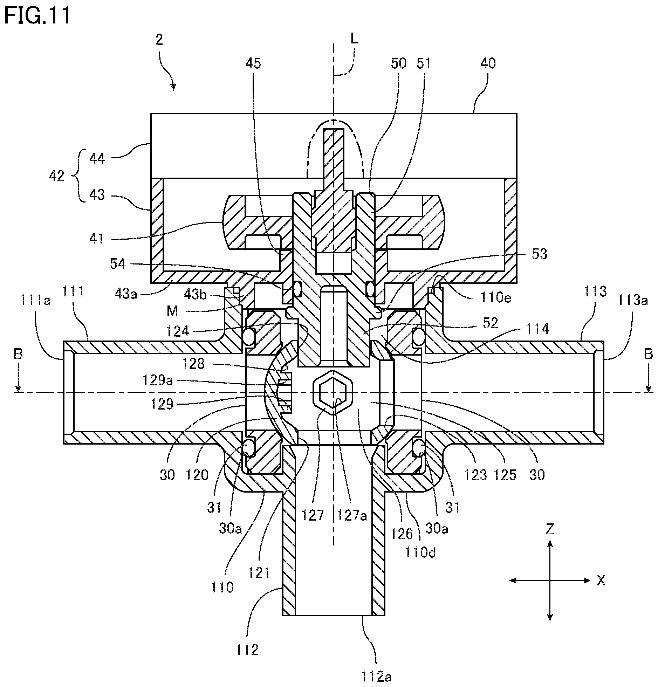

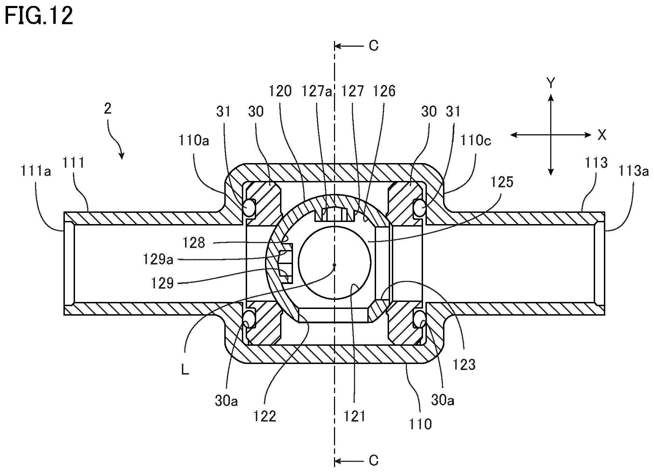

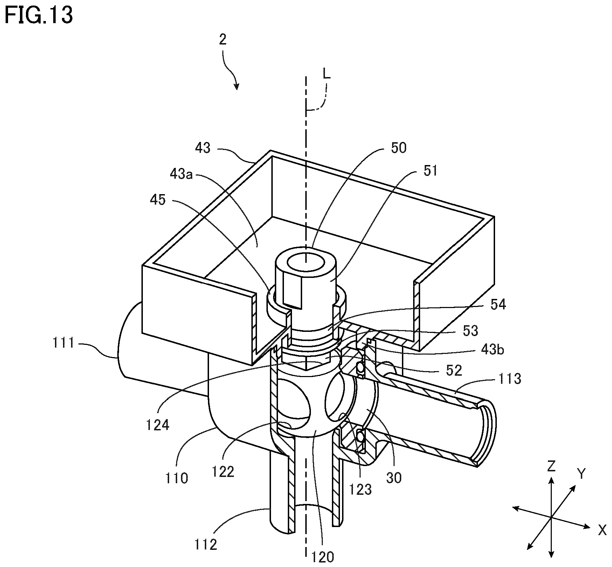

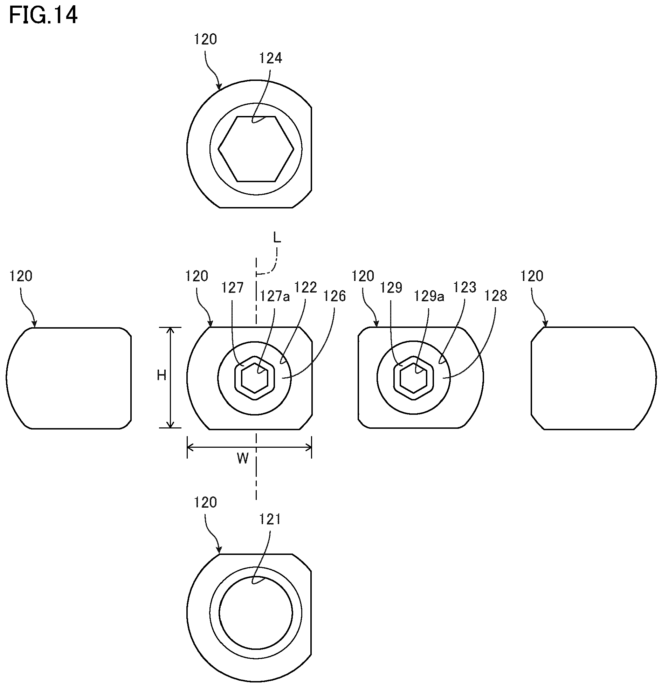

Fig. 10 illustrates a front view of the flow channel switching valve according to the second embodiment of the present invention. Fig. 11 illustrates a cross-sectional view (a vertical cross-sectional view) of the flow channel switching valve in Fig. 10 taken along the rotation axis. Fig. 12 illustrates a cross-sectional view taken along line B-B in Fig. 11. Fig. 13 illustrates a perspective view containing a section of the flow channel switching valve in Fig. 10. Fig. 14 illustrates a view of six sides of a ball valve member that the flow channel switching valve in Fig. 10 includes. In the following description, the terms "upper, lower, left, and right" are used to represent relative positional relationships of components in the figures and do not represent absolute positional relationships. In the drawings, the X-axis direction represents the left-and-right direction, the Y-axis direction represents the front-and-rear direction, and the Z-axis direction represents the up-and-down direction. The X-axis, the Y-axis, the Z-axis are perpendicular to each other.

As illustrated in Fig. 10 to Fig. 14, a flow channel switching valve 2 according to the present embodiment includes the valve body 110, a ball valve member 120, the pair of the seat members 30, the sealing members 31, the driving section 40, and the valve shaft 50. In the following description, the same components as those described in the first embodiment described above are denoted by corresponding ones of the reference signs used in the first embodiment, and description of such components is omitted.

The valve body 110 is composed of synthetic resin and has a substantially cubic box shape. A first flow channel 111 that linearly extends in the left-hand direction is provided on a left side wall portion 110a of the valve body 110. A second flow channel 112 that linearly extends downward is provided on a bottom wall portion 110d of the valve body 110. A third flow channel 113 that linearly extends in the right-hand direction is provided on a right side wall portion 110c of the valve body 110. An opening 111a in the first flow channel 111 faces in the left-hand direction, an opening 112a in the second flow channel 112 faces downward, and an opening 113a in the third flow channel 113 faces in the right-hand direction. The first flow channel 111, the second flow channel 112, and the third flow channel 113 are in communication with a valve chamber 114 that is provided in the valve body 110. Two flow channels or four or more flow channels in communication with the valve chamber 114 may be provided. The valve body 110 has an opening 110e in communication with the valve chamber 114. The opening 110e faces upward.

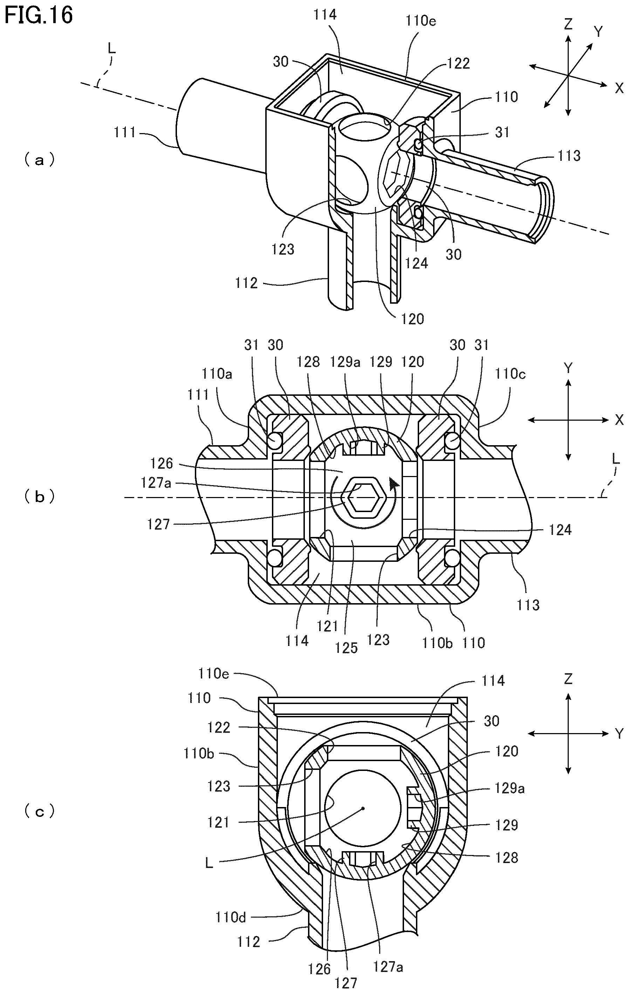

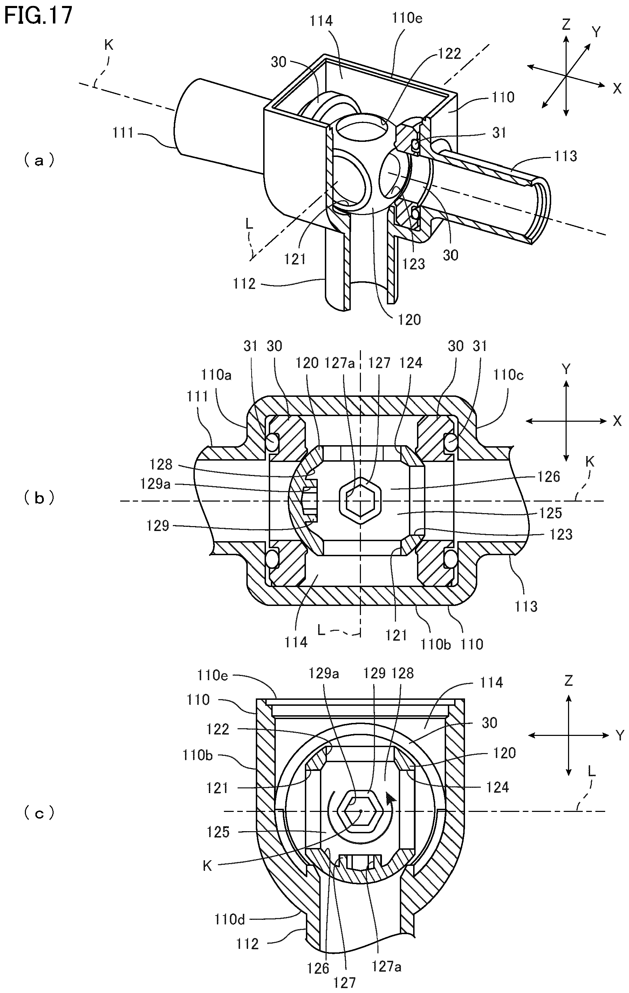

In the present embodiment, the seat members 30 are paired with each other and are installed in the valve chamber 114 so as to face each other in an interval in the X-axis direction. The seat members 30 rotatably support the ball valve member 120 such that the assembly posture (Fig. 16) with the axis L of the ball valve member 120 being parallel to the opposing direction X changes into the support posture (Fig. 17) with the axis L being parallel to the Y-axis direction perpendicular to the opposing direction X during the assembly of the flow channel switching valve 2. The seat members 30 also support the ball valve member 120 that has the support posture such that the ball valve member 120 is rotatable about a perpendicular axis K parallel to the opposing direction X. The seat members 30 also support the ball valve member 120 that has the support posture with the axis L being parallel to the Z-axis direction such that the ball valve member 120 is rotatable about the axis L (the Z-axis) at the time of completion of the assembly of the flow channel switching valve 2. The structure of each seat member 30 is freely determined provided that the ball valve member 120 is interposed therebetween and is rotatably supported unless it goes against the purpose of the present invention.

In the present embodiment, one of the sealing members 31 is interposed between one of the seat members 30 and the left side wall portion 110a of the valve body 110 so as to be in the compressed state, and the other is interposed between the other seat member 30 and the right side wall portion 110c of the valve body so as to be in the compressed state. The sealing members 31 are fitted in the annular grooves 30a that the seat members 30 have and partly project from the annular grooves 30a. The sealing members 31 seal a space between the valve body 110 and the ball valve member 120 together with the seat members 30.

The ball valve member 120 is composed of, for example, a material such as metal or synthetic resin and has a hollow ball-like shape (a spherical shape). The ball valve member 120 is rotatably supported by the seat members 30 and is installed in the valve chamber 114. The ball valve member 120 has a first opening 121 that opens downward (a backward direction from the paper in Fig. 12), a second opening 122 that opens in the front direction (downward in Fig. 12), and a third opening 123 that opens in the right-hand direction (the right-hand direction in Fig. 12) when being located at the rotational position illustrated in Fig. 12. A switching flow channel 125 that connects the first opening 121, the second opening 122, and the third opening 123 to each other is provided in the ball valve member 120.

The switching flow channel 125 is formed such that connections among the first flow channel 111, the second flow channel 112, and the third flow channel 113 are switched depending on the rotational position. Specifically, the switching flow channel 125 connects the first flow channel 111 and the third flow channel 113 to each other when the ball valve member 120 is located at the rotational position illustrated in Fig. 12. The switching flow channel 125 connects the first flow channel 111 and the second flow channel 112 to each other when the ball valve member 120 is located at the rotational position at which the ball valve member 120 is rotated 90 degrees clockwise in a plan view from the rotational position illustrated in Fig. 12.

A valve shaft insertion hole 124 in which the valve shaft 50 is inserted is provided in an upper portion of the ball valve member 120. The valve shaft insertion hole 124 is formed such that the ball valve member 120 is rotated about the axis L together with rotation of the valve shaft 50 with the valve shaft 50 inserted therein. Specifically, the valve shaft insertion hole 124 has the same shape as a cross-sectional shape (a transverse cross-sectional shape) of the prism portion 52 of the valve shaft 50 in the direction perpendicular to the rotation axis. In the present embodiment, the valve shaft insertion hole 124 has a regular hexagonal shape.

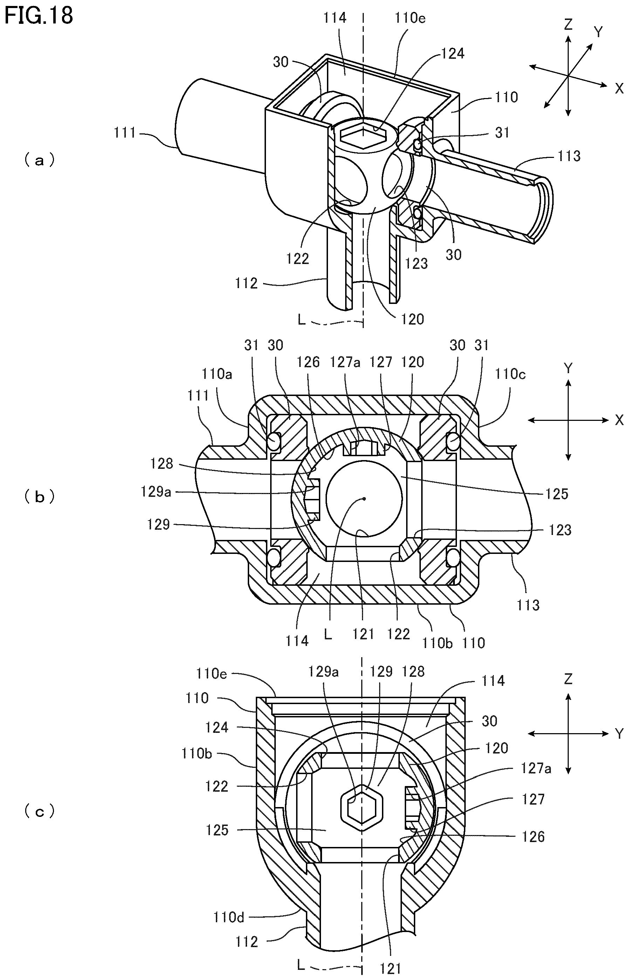

The size H of the ball valve member 120 in the direction of the axis L is smaller than the size W thereof in the direction perpendicular to the axis L (H < W) such that the sealing members 31 are in the restoration state when the ball valve member 120 has the assembly posture illustrated in Fig. 16, and such that the sealing members 31 are in the compressed state when the ball valve member 120 has the support posture illustrated in Fig. 17 and Fig. 18. In this case, when the ball valve member 120 has the assembly posture in the valve chamber 114, the sealing members 31 are in the restoration state. Accordingly, the ball valve member 120, the seat members 30, and the sealing members 31 can be inserted into the valve chamber 114 without press-fitting. When the ball valve member 120 has the support posture in the valve chamber 114, the sealing members 31 are in the compressed state. Accordingly, the seat members 30 are pressed against the ball valve member 120, and the space between the ball valve member 120 and the valve body 110 is sealed. It is only necessary for the size H of the ball valve member 120 in the direction of the axis L to be smaller than the size W thereof in the direction perpendicular to the axis such that the sealing members 31 are in the compressed state when the ball valve member 120 has the support posture, and such that the sealing members 31 are restored from the support posture when the ball valve member 120 has the assembly posture.

A first jig mounting portion 127 is disposed on an inner wall surface 126 of the ball valve member 120 opposite the second opening 122. The first jig mounting portion 127 has a projecting shape of a substantially regular hexagonal prism that projects toward the second opening 122, and a recessed portion 127a that has a regular hexagonal shape is disposed on a tip end surface. In the present embodiment, the recessed portion 127a is configured such that the recessed portion 127a and the tip end portion of the hexagonal wrench that serves as the rod-shaped jig fit together. The recessed portion 127a may be configured such that the recessed portion 127a and the tip end portion of the cross-head screwdriver or the flat head screwdriver that serves as the rod-shaped jig fit together. The first jig mounting portion 127 may be configured to be a projecting portion that is fitted in the socket wrench. The cost of the rod-shaped jig can be decreased by matching the shape of the first jig mounting portion 127 to the shape of, for example, a commercially available hexagonal wrench.

A second jig mounting portion 129 is disposed on an inner wall surface 128 of the ball valve member 120 opposite the third opening 123. The second jig mounting portion 129 has a projecting shape of a substantially regular hexagonal prism that projects toward the third opening 123, and a recessed portion 129a that has a regular hexagonal shape is disposed on a tip end surface. In the present embodiment, the recessed portion 129a and the tip end portion of the hexagonal wrench that serves as the rod-shaped jig fit together as in the recessed portion 129a of the first jig mounting portion 127.

When the ball valve member 120 is disposed in the valve chamber 114 so as to have the assembly posture, the second opening 122 can face upward, and the third opening 123 can face in the front direction. In the case of the assembly posture, the first jig mounting portion 127 on the inner wall surface 126 is visible in the Z-axis direction perpendicular to the opposing direction X from a location outside the valve body 110 through the opening 110e. When the ball valve member 120 is rotated such that the assembly posture changes into the support posture with the axis L being parallel to the Y-axis direction perpendicular to the opposing direction X, the third flow channel 113, the third opening 123, and the inner wall surface 128 can be linearly aligned. In the case of the support posture, the second jig mounting portion 129 on the inner wall surface 128 is visible in the opposing direction X (the X-axis direction) from a location outside the valve body 110 through the third flow channel 113 and the switching flow channel 125.

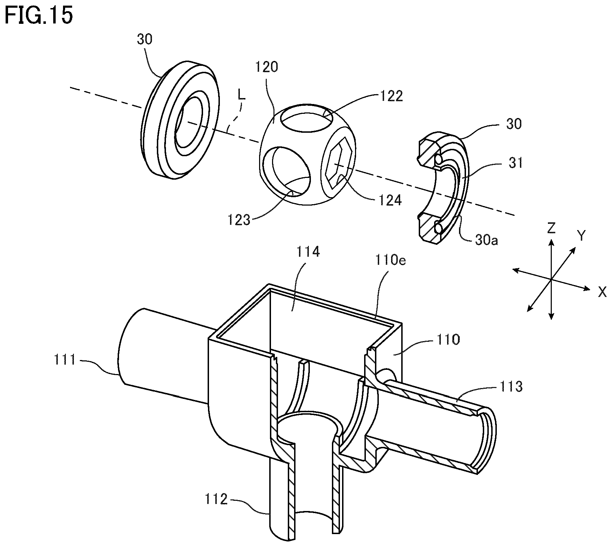

An example of a method for assembling the flow channel switching valve 2 according to the present embodiment will now be described with reference to Fig. 15 to Fig. 19.

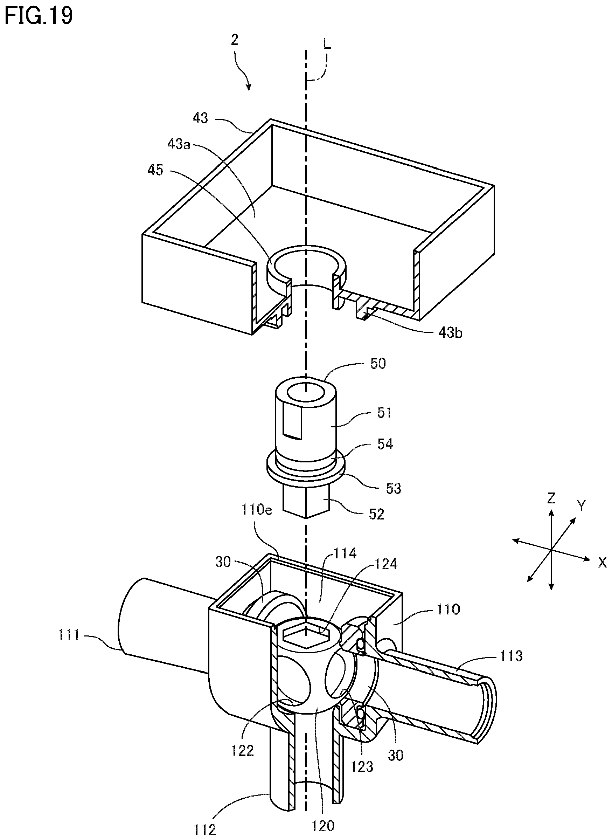

Fig. 15 to Fig. 19 illustrate the method for assembling the flow channel switching valve in Fig. 10. Specifically, Fig. 15 is an exploded perspective view illustrating a state before the ball valve member 120, the seat members 30, and the sealing members 31 are inserted into the valve body 110. Fig. 16 illustrates a state in which the ball valve member 120, the seat members 30, and the sealing members 31 are inserted in the valve body 110, and the ball valve member 120 has the assembly posture with the axis L being parallel to the X-axis direction. Fig. 17 illustrates a state in which the ball valve member 120 is rotated from the assembly posture into the support posture with the axis L being parallel to the Y-axis direction in the valve chamber 114. Fig. 18 illustrates a state in which the ball valve member 120 is rotated about the perpendicular axis K from the support posture with the axis L being parallel to the Y-axis direction into the support posture with the axis L being parallel to the Z-axis direction in the valve chamber 114. Fig. 19 is an exploded perspective view illustrating a state before the driving section 40 is joined to the valve body 110. In Fig. 16 to Fig. 18, perspective views each containing a section are illustrated at (a), enlarged vertical cross-sectional views taken along line B-B in Fig. 11 are illustrated at (b), and enlarged cross-sectional views taken along line C-C in Fig. 12 are illustrated at (c).

As illustrated in Fig. 15, the ball valve member 120 is first disposed such that the axis L is parallel to the X-axis direction, the second opening 122 faces upward, and the third opening 123 faces in the front direction. The ball valve member 120 is interposed between the seat members 30 in the X-axis direction (the opposing direction X). The sealing members 31 are fitted into the annular grooves 30a of the seat members 30. As illustrated in Fig. 16, the ball valve member 120, the seat members 30, and the sealing members 31 are inserted into the valve chamber 114 through the opening 110e of the valve body 110 with these being in contact with each other. At this time, the ball valve member 120 has the assembly posture with the axis L being parallel to the opposing direction X, and the sealing members 31 are in the restoration state in the valve chamber 114. For this reason, the sealing members 31 do not elastically deform, the ball valve member 120, the seat members 30, and the sealing members 31 are smoothly installed in the valve chamber 114. The opening 110e, the second opening 122, and the inner wall surface 126 are linearly arranged in the Z-axis direction, and the first jig mounting portion 127 is visible in the Z-axis direction from a location outside the valve body 110 through the opening 110e and the switching flow channel 125.

Subsequently, the hexagonal wrench, not illustrated, which serves as the rod-shaped jig, is inserted in the Z-axis direction into the second opening 122 through the opening 110e in a state illustrated in Fig. 16, and the tip end portion thereof and the recessed portion 127a of the first jig mounting portion 127 are fit together. The ball valve member 20 is rotated in the direction (about the Z-axis direction) perpendicular to the axis L by rotating the hexagonal wrench in the counterclockwise direction illustrated by an arrow in Fig. 16(b). As illustrated in Fig. 17, the axis L of the ball valve member 120 is matched to the Y-axis direction, and the posture becomes the support posture. In this case, since the size W of the ball valve member 120 in the direction perpendicular to the direction of the axis L is larger than the size H thereof in the direction of the axis L (H < W), when the assembly posture of the ball valve member 120 changes into the support posture, the interval between the seat members 30 widens, and the state of the sealing members 31 changes from the restoration state into the compressed state. In the case of the support posture, the third flow channel 113, the third opening 123, and the inner wall surface 128 are linearly arranged in the X-axis direction, and the second jig mounting portion 129 is visible in the opposing direction X (the X-axis direction) from a location outside the valve body 110 through the third flow channel 113 and the switching flow channel 125.

Subsequently, the hexagonal wrench, not illustrated, which serves as the rod-shaped jig, is inserted in the X-axis direction into the third opening 123 through the third flow channel 113 in a state illustrated in Fig. 17, and the tip end portion thereof and the recessed portion 129a of the second jig mounting portion 129 are fit together. The ball valve member 120 is rotated about the perpendicular axis K parallel to the opposing direction X by rotating the hexagonal wrench in the counterclockwise direction illustrated by an arrow in Fig. 17(c). As illustrated in Fig. 18, the axis L is matched to the Z-axis direction, and the posture becomes the support posture. The seat members 30 support the ball valve member 120 that has the support posture such that the ball valve member 120 is rotatable about the axis L parallel to the Z-axis direction.

Subsequently, the prism portion 52 of the valve shaft 50 is inserted into the valve shaft insertion hole 124 of the ball valve member 120 that has the support posture and that is installed in the valve chamber 114. The round columnar portion 51 of the valve shaft 50 is inserted into the bearing portion 45, and the valve body 110 and the lower case 43 of the driving section case 42 are combined. The lower case 43 is exposed to ultrasonic, and the lower case 43 is welded to the valve body 110 by ultrasonic welding. The driving mechanism is incorporated with the lower case 43, for example, by press-fitting the gear 41 to the round columnar portion 51 of the valve shaft 50 and is covered with the upper case 44, the driving section 40 is assembled, and the flow channel switching valve 2 is completed.

The flow channel switching valve 2 according to the present embodiment exerts the same effects as those of the flow channel switching valve 1 according to the first embodiment described above.

In the embodiments described above, the seat members 30 and the sealing members 31 are separated components. However, the seat members 30 and the sealing members 31 may be integrated with each other. For example, the sealing members 31, which are the O-rings, may be omitted, the seat members 30 may be composed of an elastic material and may be disposed as to be in direct contact with the valve body 10. With this structure, portions of the seat members 30 in contact with the valve body 10 serve as the sealing members.

In the first embodiment described above, the diameters of the first opening 21, the second opening 22, and the third opening 23 of the ball valve member 20 are equal to each other but are not limited thereto. For example, the diameters of the first opening 21 and the third opening 23, which are the two valve member openings opposite each other with the axis L interposed therebetween, may be smaller than the diameter of the second opening 22, which is the other valve member opening. The diameter of the first opening 21 and the diameter of the third opening 23 may be equal to each other or may differ from each other. With this structure, the inner wall surface 26 of the ball valve member 20 on which the jig mounting portion 27 is disposed is opposite the second opening 22 and is visible from the outside through the second flow channel 12 and the second opening 22 that linearly extend with the ball valve member 20 installed in the valve chamber 14. The diameter of the second flow channel 12 is larger than the diameter of the second opening 22.

In this way, the rotational position of the ball valve member 20 can be checked and set by inserting a rod-shaped positioning jig that has the same diameter as that of the second opening 22 into the second flow channel 12 during the assembly of the flow channel switching valve 1. That is, in the case where the rotational position of the ball valve member 20 is correct during the assembly, the second opening 22 of the ball valve member 20 faces the second flow channel 12. For this reason, the positioning jig can be deeply inserted, and the positioning jig enables the ball valve member 20 to be secured at the correct rotational position. In the case where the rotational position of the ball valve member 20 is not correct during the assembly, the second opening 22 of the ball valve member 20 does not face the second flow channel 12. For this reason, the positioning jig cannot be deeply inserted. In particular, in the case where the first opening 21 or the third opening 23 of the ball valve member 20 faces the second flow channel 12, it is difficult to identify the second opening 22 even by looking into the second flow channel 12. For this reason, inserting the positioning jig makes is possible to recognize that the rotational position of the ball valve member 20 is shifted, and the flow channel switching valve 1 can be more efficiently assembled. In the case where the ball valve member 20 includes two valve member openings (for example, only the first opening 21 and the second opening 22), the same effects can be exerted in a manner in which the diameter of one of the valve member openings (the first opening 21) is made smaller than the diameter of the other valve member opening (the second opening 22). Also, a structure with different sizes of valve member openings can also be applied to a ball valve element with a recessed jig mounting portion provided on the outer surface.

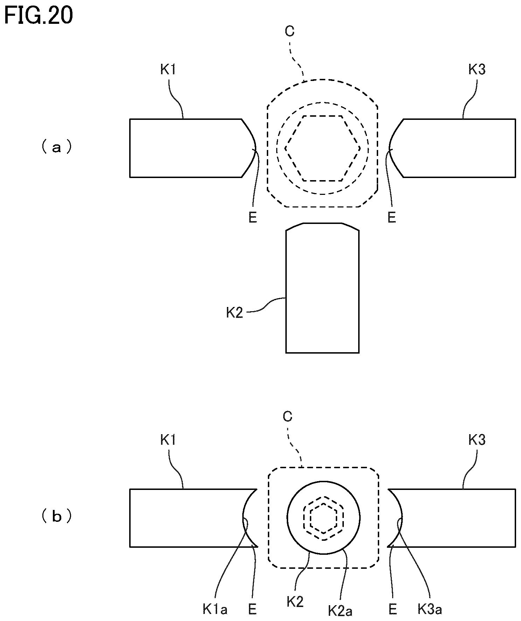

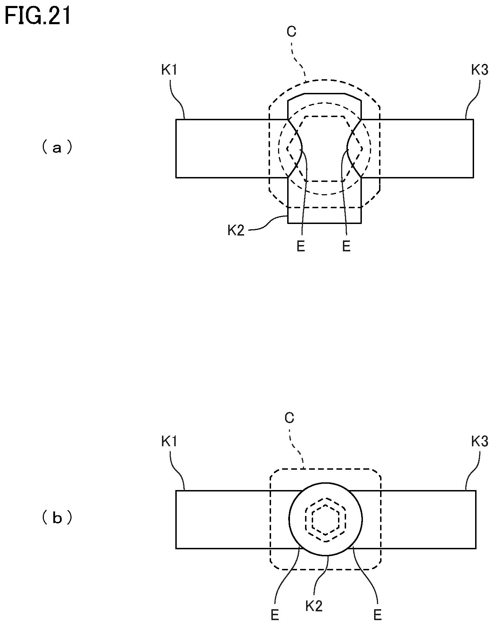

The ball valve member 20 composed of synthetic resin is manufactured by injecting molten resin into a cavity C of a mold. Fig. 20 and Fig. 21 illustrate states during manufacture of the ball valve member 20. Fig. 20 and Fig. 21 schematically illustrate states before and after mold pieces are inserted into the cavity of the mold that is used for manufacturing the ball valve member. In the figures, plan views are illustrated at (a), and front views are illustrated at (b).

During the manufacture of the ball valve member 20, a second mold piece K2 that has the same diameter as the diameter of the second opening 22 and that has a cylindrical shape is inserted in a first direction (upward in the figures at (a), or the direction from the front to the rear at (b)) into the cavity C. A first mold piece K1 that has the same diameter as the diameter of the first opening 21 and that has a cylindrical shape is inserted in a second direction (the direction from the left to the right in the figures at (a) and (b)) perpendicular to the first direction into the cavity C, and a tip end surface K1a of the first mold piece K1 is brought into close contact with an outer circumferential surface K2a of the second mold piece K2. Similarly, a third mold piece K3 that has the same diameter as the diameter of the third opening 23 and that has a cylindrical shape is inserted in the direction opposite the second direction (the direction from the right to the left in the figures at (a) and (b)), and a tip end surface K3a of the third mold piece K3 is brought into close contact with the outer circumferential surface K2a of the second mold piece K2. The molten resin is injected into the cavity C.

The tip end surface K1a of the first mold piece K1 has a concave surface along the outer circumferential surface K2a of the second mold piece K2. For this reason, a part (designated by a reference sign E) of a circumferential edge portion of the tip end surface K1a is pointed. The diameter of the second opening 22 of the ball valve member 20 is equal to the diameter of the first opening 21, and the diameter of the second mold piece K2 is equal to the diameter of the first mold piece K1. Consequently, the part E of the circumferential edge portion of the tip end surface K1a of the first mold piece K1 is very thin and is pointed. Accordingly, the rigidity of the part E of the first mold piece K1 decreases, and there is a possibility that the first mold piece K1 cannot be repeatedly used. The same is true for the third mold piece K3. The thicknesses of the parts E of the circumferential edge portions of the tip end surfaces K1a and K3a of the first mold piece K1 and the third mold piece K3 can be increased in a manner in which the diameter of the first opening 21 and the diameter of the third opening 23 are made smaller than the diameter of the second opening 22 as described above. For this reason, the rigidity of the parts E of the first mold piece K1 and the third mold piece K3 can be increased, and durability can be effectively improved. The same is true for the manufacture of the ball valve member that includes the two valve member openings.

Although embodiments of the present invention have been described above, the present invention is not limited by these embodiments.

### Reference Signs List

### (First Embodiment)

1 ··· flow channel switching valve, 10 ··· valve body, 10a ··· left side wall portion, 10b ··· front wall portion, 10c ··· right side wall portion, 10e ··· opening, 11 ··· first flow channel, 12 ··· second flow channel, 13 ··· third flow channel, 11a, 12a, 13a ··· opening, 14 ··· valve chamber, 20 ··· ball valve member, 21 ··· first opening, 22 ··· second opening, 23 ··· third opening, 24 ··· valve shaft insertion hole, 25 ··· switching flow channel, 30 ··· seat member, 30a ··· annular groove, 31 ··· sealing member, 40 ··· driving section, 41 ··· gear, 42 ··· driving section case, 43 ··· lower case, 43a ··· bottom wall, 43b ··· rib, 44 ··· upper case, 45 ··· bearing portion, 50 ··· valve shaft, 51 ··· round columnar portion, 52 ··· prism portion, 53 ··· stopper portion, 54 ··· O-ring, M ··· weld portion, C ··· cavity, K1 ··· first mold piece, K1a ··· tip end surface, K2 ··· second mold piece, K2a ··· outer circumferential surface, K3 ··· third mold piece, K3a ··· tip end surface, E ··· part of a circumferential edge portion of an tip end surface

### (Second Embodiment)

2 ··· flow channel switching valve, 110 ··· valve body, 110a ··· left side wall portion, 110b ··· front wall portion, 110c ··· right side wall portion, 110d ··· bottom wall portion, 110e ··· opening, 111 ··· first flow channel, 112 ··· second flow channel, 113 ··· third flow channel, 111a, 112a, 113a ··· opening, 114 ··· valve chamber, 120 ··· ball valve member, 121 ··· first opening, 122 ··· second opening, 123 ··· third opening, 124 ··· valve shaft insertion hole, 125 ··· switching flow channel, 30 ··· seat member, 30a ··· annular groove, 31 ··· sealing member, 40 ··· driving section, 41 ··· gear, 42 ··· driving section case, 43 ··· lower case, 43a ··· bottom wall, 43b ··· rib, 44 ··· upper case, 45 ··· bearing portion, 50 ··· valve shaft, 51 ··· round columnar portion, 52 ··· prism portion, 53 ··· stopper portion, 54 ··· O-ring, M ··· weld portion

## Claims

1. A flow channel switching valve (1) comprising: a valve body (10) that has a valve chamber (14) and flow channels (11, 12, 13) in communication with the valve chamber (14); a valve member (20) that is installed in the valve chamber (14) and that has a switching flow channel (25) therein for switching between connections of the flow channels (11, 12, 13) depending on a rotational position of the valve member (20); a pair of seat members (30) that is installed in the valve chamber (14) in an interval, that interposes the valve member (20) therebetween, and that rotatably supports the valve member (20); a sealing member (31) that is disposed between each seat member (30) and the valve body (10); and a rotation driving section that causes the valve member (20) to rotate about a rotation axis,
wherein the valve body (10) is integrally provided with the flow channels (11, 12, 13),
wherein the valve body (10) has an opening that is in communication with the valve chamber (14) and that is used for inserting the valve member (20), the pair of seat members (30), and the sealing member (31) during assembly,
wherein a size of the valve member (20) in a direction of the rotation axis is smaller than a size thereof in a direction perpendicular to the rotation axis, and
wherein a first jig mounting portion (27) for rotating the valve member (20) in the perpendicular direction is disposed on an inner wall surface of the valve member (20) that is visible from a location outside the valve body (10) through the opening or the flow channels (11, 12, 13),
wherein the valve member (20) has three valve member openings (21, 22, 23) that face in the direction perpendicular to the rotation axis and that are connected to each other by using the switching flow channel (25),
wherein the three valve member openings (21, 22, 23) are arranged about the rotation axis in an interval of 90 degrees,
wherein diameters of two valve member openings (21, 23) opposite each other with the rotation axis interposed therebetween among the three valve member openings are smaller than a diameter of the other valve member opening (22),
wherein the inner wall surface (26) of the valve member (20) on which the first jig mounting portion (27) is disposed is opposite the other valve member opening (22).

2. A flow channel switching valve comprising: a valve body (10) that has a valve chamber and (14) flow channels (11, 12, 13) in communication with the valve chamber (14); a valve member (20) that is installed in the valve chamber (14) and that has a switching flow channel (25) therein for switching between connections of the flow channels (11, 12, 13) depending on a rotational position of the valve member (20); a pair of seat members (30) that is installed in the valve chamber (14) in an interval, that interposes the valve member (20) therebetween, and that rotatably supports the valve member (20); a sealing member (31) that is disposed between each seat member (30) and the valve body (10); and a rotation driving section that causes the valve member (20) to rotate about a rotation axis,
wherein the valve body (10) has an opening that is in communication with the valve chamber (14) and that is used for inserting the valve member (20), the pair of seat members (30), and the sealing member (31) during assembly,
wherein a size of the valve member (20) in a direction of the rotation axis is smaller than a size thereof in a direction perpendicular to the rotation axis, and
wherein a first jig mounting portion for rotating the valve member (20) in the perpendicular direction is disposed on an inner wall surface of the valve member (20) that is visible from a location outside the valve body (10) through the opening or the flow channels (11, 12, 13),
wherein the valve member (20) has two valve member openings (21, 22) that face in the direction perpendicular to the rotation axis and that are connected to each other by using the switching flow channel (25),
wherein the two valve member openings (21, 22) are arranged about the rotation axis in an interval of 90 degrees, and
wherein a diameter of one valve member opening (21) of the two valve member openings (21, 22) is smaller than a diameter of the other valve member opening (22).

3. The flow channel switching valve according to Claim 2, wherein a second jig mounting portion for rotating the valve member (20) in the perpendicular direction is disposed on the inner wall surface of the valve member (20) that is visible from a location outside the valve body (10) through the opening or the flow channels (11, 12, 13).

4. The flow channel switching valve according to any one of Claims 1 to 3, wherein the size of the valve member (20) in the direction of the rotation axis is smaller than the size thereof in the direction perpendicular to the rotation axis such that the sealing member is in a compressed state when the valve member (20) has a support posture with the rotation axis being perpendicular to an opposing direction of the pair of seat members (30), and such that the sealing member (31) is in a restoration state when the valve member (20) has an assembly posture with the rotation axis being parallel to the opposing direction.

5. The flow channel switching valve according to any one of Claims 1 to 4, wherein the first jig mounting portion has a recessed portion or a projecting portion that has a regular hexagonal shape.

6. The flow channel switching valve according to Claim 3, wherein the second jig mounting portion has a recessed portion or a projecting portion that has a regular hexagonal shape.

7. A method for assembling a flow channel switching valve that includes a valve body (10) that has a valve chamber (14) and flow channels (11, 12, 13) in communication with the valve chamber (14), a valve member (20) that is installed in the valve chamber (14) and that has a switching flow channel (25) therein for switching between connections of the flow channels (11, 12, 13) depending on a rotational position of the valve member (20), a pair of seat members (30) that is installed in the valve chamber (14) in an interval, that interposes the valve member (20) therebetween, and that rotatably supports the valve member (20), and a sealing member (31) that is disposed between each seat member (30) and the valve body (10), the valve body (10) being integrally provided with the flow channels (11, 12, 13), and the valve body (10) having an opening that is in communication with the valve chamber (14) and that is used for inserting the valve member (20), the pair of seat members (30), and the sealing member (31) during assembly, the pair of seat members (30) rotatably supporting the valve member (20) such that an assembly posture with a rotation axis of the valve member (20) being parallel to an opposing direction of the pair of seat members (30) changes into a support posture with the rotation axis being perpendicular to the opposing direction, the pair of seat members (30) supporting the valve member (20) that has the support posture such that the valve member (20) is rotatable about the rotation axis, a size of the valve member (20) in a direction of the rotation axis being smaller than a size thereof in a direction perpendicular to the rotation axis such that the seat members, the sealing member (31), or both are in a compressed state when the valve member (20) has the support posture, and the seat members (30), the sealing member (31), or both are restored from the support posture when the valve member (20) has the assembly posture, a first jig mounting portion that is configured such that the first jig mounting portion and an tip end portion of a rod-shaped jig fit together, and such that the valve member (20) is rotated from the assembly posture into the support posture together with rotation of the rod-shaped jig being disposed on an inner wall surface of the valve member (20) that is visible in a direction perpendicular to the opposing direction from a location outside the valve body (10) through the opening or the flow channels (11, 12, 13) when the valve member (20) has the assembly posture,
the valve member (20) having three valve member openings (21, 22, 23) that face in the direction perpendicular to the rotation axis and that are connected to each other by using the switching flow channel (25), the three valve member openings (21, 22, 23) being arranged about the rotation axis in an interval of 90 degrees, diameters of two valve member openings (21, 23) opposite each other with the rotation axis interposed therebetween among the three valve member openings (21, 22, 23) being smaller than a diameter of the other valve member opening (22), the inner wall surface (26) of the valve member (20) on which the first jig mounting portion (27) is disposed being opposite the other valve member opening (22),
the method comprising:
installing the pair of seat members (30) and the sealing member (31) in the valve chamber (14) and disposing the valve member (20) between the pair of seat members (30) such that the valve member (20) has the assembly posture;
inserting the rod-shaped jig in the direction perpendicular to the opposing direction through the flow channels (11, 12, 13) and fitting a tip end portion thereof and the first jig mounting portion together; and
rotating the rod-shaped jig and rotating the valve member (20) from the assembly posture into the support posture.

8. A method for assembling a flow channel switching valve that includes a valve body (10) that has a valve chamber (14) and flow channels (11, 12, 13) in communication with the valve chamber (14), a valve member (20) that is installed in the valve chamber (14) and that has a switching flow channel (25) therein for switching between connections of the flow channels (11, 12, 13) depending on a rotational position of the valve member (20), a pair of seat members (30) that is installed in the valve chamber (14) in an interval, that interposes the valve member (20) therebetween, and that rotatably supports the valve member (20), and a sealing member (31) that is disposed between each seat member (30) and the valve body (10), and the valve body (10) having an opening that is in communication with the valve chamber (14) and that is used for inserting the valve member (20), the pair of seat members (30), and the sealing member (31) during assembly, the pair of seat members (30) rotatably supporting the valve member (20) such that an assembly posture with a rotation axis of the valve member (20) being parallel to an opposing direction of the pair of seat members (30) changes into a support posture with the rotation axis being perpendicular to the opposing direction, the pair of seat members (30) supporting the valve member (20) that has the support posture such that the valve member (20) is rotatable about the rotation axis, a size of the valve member (20) in a direction of the rotation axis being smaller than a size thereof in a direction perpendicular to the rotation axis such that the seat members (30), the sealing member (31), or both are in a compressed state when the valve member (20) has the support posture, and the seat members (30), the sealing member (31), or both are restored from the support posture when the valve member (20) has the assembly posture, a first jig mounting portion that is configured such that the first jig mounting portion and an tip end portion of a rod-shaped jig fit together, and such that the valve member (20) is rotated from the assembly posture into the support posture together with rotation of the rod-shaped jig being disposed on an inner wall surface of the valve member (20) that is visible in a direction perpendicular to the opposing direction from a location outside the valve body (10) through the opening or the flow channels (11, 12, 13) when the valve member (20) has the assembly posture,
the valve member (20) having two valve member openings (21, 22) that face in the direction perpendicular to the rotation axis and that are connected to each other by using the switching flow channel (25), the two valve member openings (21, 22) being arranged about the rotation axis in an interval of 90 degrees, a diameter of one valve member opening (21) of the two valve member openings being smaller than a diameter of the other valve member opening (22),
the method comprising:
installing the pair of seat members (30) and the sealing member (31) in the valve chamber (14) and disposing the valve member (20) between the pair of seat members (30) such that the valve member (20) has the assembly posture;
inserting the rod-shaped jig in the direction perpendicular to the opposing direction through the opening or the flow channels (11, 12, 13) and fitting a tip end portion thereof and the first jig mounting portion together; and
rotating the rod-shaped jig and rotating the valve member (20) from the assembly posture into the support posture.

9. The method for assembling the flow channel switching valve according to Claim 8, wherein the pair of seat members (30) supports the valve member (20) that has the support posture such that the valve member (20) is rotatable about a perpendicular axis parallel to the opposing direction, and a second jig mounting portion that is configured such that the second jig mounting portion and the tip end portion of the rod-shaped jig fit together, and such that the valve member (20) is rotated about the perpendicular axis together with rotation of the rod-shaped jig is disposed on the inner wall surface of the valve member (20) that is visible in the opposing direction from a location outside the valve body (10) through the opening or the flow channels (11, 12, 13) when the valve member (20) has the support posture,
wherein the rod-shaped jig is inserted in the opposing direction through the flow channels (11, 12, 13), and the tip end portion thereof and the second jig mounting portion are fit together, and
wherein the rod-shaped jig is rotated, and the valve member (20) is rotated about the perpendicular axis.

## Patentansprüche

1. Ein Strömungskanalschaltventil (1), umfassend:
ein Ventilgehäuse (10), das eine Ventilkammer (14) und Strömungskanäle (11, 12, 13), die in Verbindung mit der Ventilkammer (14) sind, aufweist;
ein Ventilelement (20), das in der Ventilkammer (14) angeordnet ist und einen Schaltströmungskanal (25) enthält, um die Verbindungen der Strömungskanäle (11, 12, 13) je nach Drehposition des Ventilelements (20) umzuschalten;
ein Sitzelementpaar (30), das in der Ventilkammer (14) in einem Zwischenraum angeordnet ist, der das Ventilelement (20) dazwischen einschließt, und der das Ventilelement (20) drehbar stützt;
ein Dichtelement (31), das zwischen jedem Sitzelement (30) und dem Ventilgehäuse (10) angeordnet ist; und
einen Drehantriebsabschnitt, der das Ventilelement (20) um eine Drehachse drehen lässt,
wobei das Ventilgehäuse (10) integraler Bestandteil der Strömungskanäle (11, 12, 13) ist,
wobei das Ventilgehäuse (10) eine Öffnung aufweist, die mit der Ventilkammer (14) in Verbindung steht und die verwendet wird, um das Ventilelement (20), das Sitzelementpaar (30) und das Dichtelement (31) während der Montage einzuführen,
wobei eine Größe des Ventilelements (20) in Richtung der Drehachse kleiner ist als seine Größe in einer Richtung senkrecht zur Drehachse, und
wobei ein erster Vorrichtungshalterungsbereich (27) zum Drehen des Ventilelements (20) in der senkrechten Richtung auf einer inneren Wandfläche des Ventilelements (20) angeordnet ist, die von einem Ort außerhalb des Ventilgehäuses (10) durch die Öffnung oder die Strömungskanäle (11, 12, 13) sichtbar ist,
wobei das Ventilelement (20) drei Ventilelementöffnungen (21, 22, 23) aufweist, die in der Richtung senkrecht zur Drehachse angeordnet sind und durch den Schaltströmungskanal (25) miteinander verbunden sind,
wobei die drei Ventilelementöffnungen (21, 22, 23) um die Drehachse in einem Abstand von 90 Grad angeordnet sind,
wobei die Durchmesser von zwei Ventilelementöffnungen (21, 23) von den drei Ventilelementöffnungen, welche zwei Öffnungen mit der dazwischen angeordneten Drehachse einander gegenüberliegen, kleiner sind als der Durchmesser der anderen Ventilelementöffnung (22), und
wobei die innere Wandfläche (26) des Ventilelements (20), auf der sich der erste Vorrichtungshalterungsbereich (27) befindet, der anderen Ventilelementöffnung (22) gegenüberliegt.

2. Ein Strömungskanalschaltventil, umfassend:
ein Ventilgehäuse (10), das eine Ventilkammer (14) und Strömungskanäle (11, 12, 13) in Verbindung mit der Ventilkammer (14) aufweist;
ein Ventilelement (20), das in der Ventilkammer (14) angeordnet ist und einen Schaltströmungskanal (25) umfasst, um die Verbindungen der Strömungskanäle (11, 12, 13) je nach Drehposition des Ventilelements (20) umzuschalten;
ein Sitzelementpaar (30), das in der Ventilkammer (14) in einem Zwischenraum angeordnet ist, der das Ventilelement (20) dazwischen einschließt und das Ventilelement (20) drehbar stützt;
ein Dichtelement (31), das zwischen jedem Sitzelement (30) und dem Ventilgehäuse (10) angeordnet ist; und
einen Drehabschnitt, der das Ventilelement (20) um eine Drehachse drehen lässt,
wobei das Ventilgehäuse (10) eine Öffnung aufweist, die mit der Ventilkammer (14) in Verbindung steht und die verwendet wird, um das Ventilelement (20), das Sitzelementpaar (30) und das Dichtelement (31) während der Montage einzuführen,
wobei eine Größe des Ventilelements (20) in Richtung der Drehachse kleiner ist als seine Größe in einer Richtung senkrecht zur Drehachse, und
wobei ein erster Vorrichtungshalterungsbereich (27) zum Drehen des Ventilelements (20) in der senkrechten Richtung auf einer inneren Wandfläche des Ventilelements (20) angeordnet ist, die von einem Ort außerhalb des Ventilgehäuses (10) durch die Öffnung oder die Strömungskanäle (11, 12, 13) sichtbar ist,
wobei das Ventilelement (20) zwei Ventilelementöffnungen (21, 22) aufweist, die in der Richtung senkrecht zur Drehachse angeordnet sind und durch den Schaltströmungskanal (25) miteinander verbunden sind,
wobei die beiden Ventilelementöffnungen (21, 22) um die Drehachse in einem Abstand von 90 Grad angeordnet sind, und
wobei ein Durchmesser einer der beiden Ventilelementöffnungen (21) kleiner ist als ein Durchmesser der anderen Ventilelementöffnung.

3. Das Strömungskanalschaltventil nach Anspruch 2, wobei ein zweiter Vorrichtungshalterungsbereich zur Drehung des Ventilelements (20) in der senkrechten Richtung auf der inneren Wandfläche des Ventilelements (20) angeordnet ist, die von einem Ort außerhalb des Ventilgehäuses (10) durch die Öffnung oder die Strömungskanäle (11, 12, 13) sichtbar ist.

4. Das Strömungskanalschaltventil nach einem der Ansprüche 1 bis 3, wobei die Größe des Ventilelements (20) in der Richtung der Drehachse kleiner ist als die Größe in der Richtung senkrecht zur Drehachse, sodass das Dichtelement in einem komprimierten Zustand ist, wenn das Ventilelement (20) eine Stützposition mit der Drehachse einnimmt, die senkrecht zu einer gegenüberliegenden Richtung des Sitzelementpaars (30) ist, und das Dichtelement (31) in einem Entspannungszustand ist, wenn das Ventilelement (20) eine Montageposition mit der Drehachse einnimmt, die parallel zur gegenüberliegenden Richtung steht.

5. Das Strömungskanalschaltventil nach einem der Ansprüche 1 bis 4, wobei der erste Vorrichtungshalterungsbereich eine Vertiefung oder einen Vorsprung aufweist, der eine regelmäßige sechseckige Form hat.

6. Das Strömungskanalschaltventil nach Anspruch 3, wobei der zweite Vorrichtungshalterungsbereich eine Vertiefung oder einen Vorsprung aufweist, der eine regelmäßige sechseckige Form hat.

7. Ein Verfahren zur Montage eines Strömungskanalschaltventils, das ein Ventilgehäuse (10) umfasst, das eine Ventilkammer (14) und Strömungskanäle (11, 12, 13), die in Verbindung mit der Ventilkammer (14) sind, aufweist, ein Ventilelement (20), das in der Ventilkammer (14) angeordnet ist und einen Schaltströmungskanal (25) enthält, um die Verbindungen der Strömungskanäle (11, 12, 13) je nach Drehposition des Ventilelements (20) umzuschalten, ein Sitzelementpaar (30), das in der Ventilkammer (14) in einem Zwischenraum angeordnet ist, der das Ventilelement (20) dazwischen einschließt, und welches das Ventilelement (20) drehbar stützt, und ein Dichtelement (31), das zwischen jedem Sitzelement (30) und dem Ventilgehäuse (10) angeordnet ist, wobei das Ventilgehäuse (10) integraler Bestandteil der Strömungskanäle (11, 12, 13) ist und das Ventilgehäuse (10) eine Öffnung aufweist, die mit der Ventilkammer (14) in Verbindung steht und die verwendet wird, um das Ventilelement (20), das Sitzelementpaar (30) und das Dichtelement (31) während der Montage einzuführen, wobei das Sitzelementpaar (30) das Ventilelement (20) drehbar stützt, sodass eine Montageposition mit einer Drehachse des Ventilelements (20), die parallel zur gegenüberliegenden Richtung des Sitzelementpaares (30) verläuft, in eine Stützposition übergeht, in der die Drehachse senkrecht zur gegenüberliegenden Richtung verläuft, wobei das Sitzelementpaar (30) das Ventilelement (20) in der Stützposition stützt, sodass das Ventilelement (20) um die Drehachse drehbar ist, wobei eine Größe des Ventilelements (20) in Richtung der Drehachse kleiner ist als seine Größe in einer Richtung senkrecht zur Drehachse, sodass die Sitzelemente, das Dichtelement (31) oder beide in einem komprimierten Zustand sind, wenn das Ventilelement (20) die Stützposition einnimmt, und die Sitztelemente (30), das Dichtelement (31) oder beide sich aus der Stützposition zurückstellen, wenn das Ventilelement (20) die Montageposition einnimmt, wobei ein erster Vorrichtungshalterungsbereich so konfiguriert ist, um mit einem Endbereich eines stabförmigen Werkzeugs zusammenzupassen und, dass das Ventilelement (20) von der Montageposition in die Stützposition zusammen mit einer Drehung des stabförmigen Werkzeugs, das auf einer inneren Wandfläche des Ventilelements (20) angeordnet ist, die in einer Richtung senkrecht zur gegenüberliegenden Richtung von einem Ort außerhalb des Ventilgehäuses (10) durch die Öffnung oder die Strömungskanäle (11, 12, 13) sichtbar ist, wenn das Ventilelement (20) die Montageposition einnimmt, dreht,
wobei das Ventilelement (20) drei Ventilelementöffnungen (21, 22, 23) hat, die in der Richtung senkrecht zur Drehachse angeordnet sind und durch den Schaltströmungskanal (25) miteinander verbunden sind, wobei die drei Ventilelementöffnungen (21, 22, 23) um die Drehachse in einem Abstand von 90 Grad angeordnet sind, wobei die Durchmesser von zwei Ventilelementöffnungen (21, 23) der drei Ventilelementöffnungen, welche zwei Ventilelementöffnungen mit der dazwischen angeordneten Drehachse einander gegenüberliegen, kleiner sind als der Durchmesser der anderen Ventilelementöffnung (22), wobei die innere Wandfläche (26) des Ventilelements (20), auf der sich der erste Vorrichtungshalterungsbereich (27) befindet, der anderen Ventilelementöffnung (22) gegenüberliegt,
das Verfahren umfassend:
Installieren des Sitzelementpaars (30) und des Dichtelements (31) in der Ventilkammer (14) und Platzieren des Ventilelements (20) zwischen dem Sitzelementpaar (30), sodass das Ventilelement (20) die Montageposition einnimmt;
Einführen des stabförmigen Werkzeugs in Richtung senkrecht zur gegenüberliegenden Richtung durch die Strömungskanäle (11, 12, 13) und Zusammenpassen eines Endbereichs des Werkzeugs und des ersten Vorrichtungshalterungsbereichs; und
Drehen des stabförmigen Werkzeugs und Drehen des Ventilelements (20) von der Montageposition in die Stützposition.

8. Ein Verfahren zur Montage eines Strömungskanalschaltventils, das ein Ventilgehäuse (10) umfasst, das eine Ventilkammer (14) und Strömungskanäle (11, 12, 13), die in Verbindung mit der Ventilkammer (14) sind, aufweist, ein Ventilelement (20), das in der Ventilkammer (14) angeordnet ist und einen Schaltströmungskanal (25) enthält, um die Verbindungen der Strömungskanäle (11, 12, 13) je nach Drehposition des Ventilelements (20) umzuschalten, ein Sitzelementpaar (30), das in der Ventilkammer (14) in einem Zwischenraum angeordnet ist, der das Ventilelement (20) dazwischen einschließt, und welches das Ventilelement (20) drehbar stützt, sowie ein Dichtelement (31), das zwischen jedem Sitzelement (30) und dem Ventilgehäuse (10) angeordnet ist, wobei das Ventilgehäuse (10) eine Öffnung aufweist, die mit der Ventilkammer (14) in Verbindung steht und die verwendet wird, um das Ventilelement (20), das Sitzelementpaar (30) und das Dichtelement (31) während der Montage einzuführen, wobei das Sitzelementpaar (30) das Ventilelement (20) drehbar stützt, sodass eine Montageposition, in der die Drehachse des Ventilelements (20) parallel zur gegenüberliegenden Richtung des Sitzelementpaars (30) verläuft, in eine Stützposition übergeht, in der die Drehachse senkrecht zur gegenüberliegenden Richtung verläuft, wobei das Sitzelementpaar (30) das Ventilelement (20) in der Stützposition stützt, sodass das Ventilelement (20) um die Drehachse drehbar ist, wobei eine Größe des Ventilelements (20) in Richtung der Drehachse ist kleiner als seine Größe in einer Richtung senkrecht zur Drehachse, sodass die Sitzelemente (30), das Dichtelement (31) oder beide in einem komprimierten Zustand sind, wenn das Ventilelement (20) die Stützposition einnimmt, und die Sitztelemente (30), das Dichtelement (31) oder beide aus der Stützposition zurückkehren, wenn das Ventilelement (20) die Montageposition einnimmt, wobei ein erster Vorrichtungshalterungsbereich konfiguriert ist, um mit einem Endbereich eines stabförmigen Werkzeugs zusammenzupassen und, dass das Ventilelement (20) von der Montageposition in die Stützposition zusammen mit einer Drehung des stabförmigen Werkzeugs, das auf einer inneren Wandfläche des Ventilelements (20) angeordnet ist, die in einer Richtung senkrecht zur gegenüberliegenden Richtung von einem Ort außerhalb des Ventilgehäuses (10) durch die Öffnung oder die Strömungskanäle (11, 12, 13) sichtbar ist, wenn das Ventilelement (20) die Montageposition einnimmt, dreht,
wobei das Ventilelement (20) zwei Ventilelementöffnungen (21, 22) hat, die in der Richtung senkrecht zur Drehachse angeordnet sind und durch den Schaltströmungskanal (25) miteinander verbunden sind, wobei die beiden Ventilelementöffnungen (21, 22) um die Drehachse in einem Abstand von 90 Grad angeordnet sind, wobei der Durchmesser einer Ventilelementöffnung (21) der beiden Ventilelementöffnungen kleiner ist als der Durchmesser der anderen Ventilelementöffnung (22),
das Verfahren umfassend:
Installieren des Sitzelementpaars (30) und des Dichtelements (31) in der Ventilkammer (14) und Platzieren des Ventilelements (20) zwischen dem Sitzelementpaar (30), sodass das Ventilelement (20) die Montageposition einnimmt;
Einführen des stabförmigen Werkzeugs in Richtung senkrecht zur gegenüberliegenden Richtung durch die Öffnung oder die Strömungskanäle (11, 12, 13) und Zusammenpassen eines Endbereichs des Werkzeugs und des ersten Vorrichtungshalterungsbereichs; und
Drehen des stabförmigen Werkzeugs und Drehen des Ventilelements (20) aus der Montageposition in die Stützposition.

9. Das Verfahren zur Montage des Strömungskanalschaltventils nach Anspruch 8, wobei das Sitzelementpaar (30) das Ventilelement (20) in der Stützposition so stützt, dass das Ventilelement (20) um eine senkrechte Achse drehbar ist, die parallel zur gegenüberliegenden Richtung verläuft, und wobei ein zweiter Vorrichtungshalterungsbereich, der so konfiguriert ist, dass der zweite Vorrichtungshalterungsbereich und das Endstück des stabförmigen Werkzeugs zusammenpassen und das Ventilelement (20) gemeinsam mit der Drehung des stabförmigen Werkzeugs um die senkrechte Achse gedreht wird, auf der inneren Wandfläche des Ventilelements (20) angeordnet ist, die in der gegenüberliegenden Richtung von einem Ort außerhalb des Ventilgehäuses (10) durch die Öffnung oder die Strömungskanäle (11, 12, 13) sichtbar ist, wenn das Ventilelement (20) die Stützposition einnimmt,
wobei das stabförmige Werkzeug in die gegenüberliegende Richtung durch die Strömungskanäle (11, 12, 13) eingeführt wird, und das Endstück davon mit dem zweiten Vorrichtungshalterungsbereich zusammenpasst; und
wobei das stabförmige Werkzeug gedreht wird, und das Ventilelement (20) um die senkrechte Achse gedreht wird.

## Revendications

1. Soupape de commutation de canal d'écoulement (1) comportant : un corps de soupape (10) qui a une chambre de soupape (14) et des canaux d'écoulement (11, 12, 13) en communication avec la chambre de soupape (14) ; un élément de soupape (20) qui est installé dans la chambre de soupape (14) et qui a un canal d'écoulement de commutation (25) dans celui-ci pour commuter entre des raccordements des canaux d'écoulement (11, 12, 13) en fonction d'une position de rotation de l'élément de soupape (20), une paire d'éléments de siège (30) qui est installée dans la chambre de soupape (14) dans un intervalle, qui intercale l'élément de soupape (20) entre ceux-ci, et qui supporte en rotation l'élément de soupape (20) ; un élément d'étanchéité (31) qui est disposé entre chaque élément de siège (30) et le corps de soupape (10) ; et une section d'entraînement en rotation qui amène l'élément de soupape (20) à tourner autour d'un axe de rotation,
dans laquelle le corps de soupape (10) est agencé d'un seul tenant avec les canaux d'écoulement (11, 12, 13),
dans laquelle le corps de soupape (10) a une ouverture qui est en communication avec la chambre de soupape (14) et qui est utilisée pour insérer l'élément de soupape (20), la paire d'éléments de siège (30) et l'élément d'étanchéité (31) pendant un assemblage,
dans laquelle une taille de l'élément de soupape (20) dans une direction de l'axe de rotation est plus petite qu'une taille de celui-ci dans une direction perpendiculaire à l'axe de rotation, et
dans laquelle une première partie de montage de gabarit (27) destinée à faire tourner l'élément de soupape (20) dans la direction perpendiculaire est disposée sur une surface de paroi intérieure de l'élément de soupape (20) qui est visible à partir d'un emplacement situé à l'extérieur du corps de soupape (10) à travers l'ouverture ou les canaux d'écoulement (11, 12, 13),
dans laquelle l'élément de soupape (20) a trois ouvertures d'élément de soupape (21, 22, 23) qui sont dirigées dans la direction perpendiculaire à l'axe de rotation et qui sont reliées les unes aux autres en utilisant le canal d'écoulement de commutation (25),
dans laquelle les trois ouvertures d'élément de soupape (21, 22, 23) sont agencées autour de l'axe de rotation dans un intervalle de 90 degrés,
dans laquelle des diamètres de deux ouvertures d'élément de soupape (21, 23) opposées l'une à l'autre avec l'axe de rotation intercalé entre celles-ci parmi les trois ouvertures d'élément de soupape sont plus petits qu'un diamètre de l'autre ouverture d'élément de soupape (22),
dans laquelle la surface de paroi intérieure (26) de l'élément de soupape (20) sur lequel la première partie de montage de gabarit (27) est disposée, est opposée à l'autre ouverture d'élément de soupape (22).

2. Soupape de commutation de canal d'écoulement comportant : un corps de soupape (10) qui a une chambre de soupape (14) et des canaux d'écoulement (11, 12, 13) en communication avec la chambre de soupape (14) ; un élément de soupape (20) qui est installé dans la chambre de soupape (14) et qui a un canal d'écoulement de commutation (25) dans celui-ci pour commuter entre des raccordements des canaux d'écoulement (11, 12, 13) en fonction d'une position de rotation de l'élément de soupape (20) ; une paire d'éléments de siège (30) qui est installée dans la chambre de soupape (14) dans un intervalle, qui intercale l'élément de soupape (20) entre ceux-ci, et qui supporte en rotation l'élément de soupape (20) ; un élément d'étanchéité (31) qui est disposé entre chaque élément de siège (30) et le corps de soupape (10) ; et une section d'entraînement en rotation qui amène l'élément de soupape (20) à tourner autour d'un axe de rotation,
dans laquelle le corps de soupape (10) a une ouverture qui est en communication avec la chambre de soupape (14) et qui est utilisée pour insérer l'élément de soupape (20), la paire d'éléments de siège (30) et l'élément d'étanchéité (31) pendant un assemblage,
dans laquelle une taille de l'élément de soupape (20) dans une direction de l'axe de rotation est plus petite qu'une taille de celui-ci dans une direction perpendiculaire à l'axe de rotation, et
dans laquelle une première partie de montage de gabarit destinée à faire tourner l'élément de soupape (20) dans la direction perpendiculaire est disposée sur une surface de paroi intérieure de l'élément de soupape (20) qui est visible à partir d'un emplacement situé à l'extérieur du corps de soupape (10) à travers l'ouverture ou les canaux d'écoulement (11, 12, 13),
dans laquelle l'élément de soupape (20) a deux ouvertures d'élément de soupape (21, 22) qui sont dirigées dans la direction perpendiculaire à l'axe de rotation et qui sont reliées l'une à l'autre en utilisant le canal d'écoulement de commutation (25),
dans laquelle les deux ouvertures d'élément de soupape (21, 22) sont agencées autour de l'axe de rotation dans un intervalle de 90 degrés, et
dans laquelle un diamètre d'une ouverture d'élément de soupape (21) des deux ouvertures d'élément de soupape (21, 22) est plus petit qu'un diamètre de l'autre ouverture d'élément de soupape (22).

3. Soupape de commutation de canal d'écoulement selon la revendication 2, dans laquelle une seconde partie de montage de gabarit destinée à faire tourner l'élément de soupape (20) dans la direction perpendiculaire est disposée sur la surface de paroi intérieure de l'élément de soupape (20) qui est visible à partir d'un emplacement situé à l'extérieur du corps de soupape (10) à travers l'ouverture ou les canaux d'écoulement (11, 12, 13).

4. Soupape de commutation de canal d'écoulement selon l'une quelconque des revendications 1 à 3, dans laquelle la taille de l'élément de soupape (20) dans la direction de l'axe de rotation est plus petite que la taille de celui-ci dans la direction perpendiculaire à l'axe de rotation de telle sorte que l'élément d'étanchéité est dans un état comprimé lorsque l'élément de soupape (20) a une posture de support avec l'axe de rotation étant perpendiculaire à une direction opposée de la paire d'éléments de siège (30), et de telle sorte que l'élément d'étanchéité (31) est dans un état de rappel lorsque l'élément de soupape (20) a une posture d'assemblage avec l'axe de rotation étant parallèle à la direction opposée.

5. Soupape de commutation de canal d'écoulement selon l'une quelconque des revendications 1 à 4, dans laquelle la première partie de montage de gabarit a une partie évidée ou une partie saillante qui a une forme hexagonale régulière.

6. Soupape de commutation de canal d'écoulement selon la revendication 3, dans laquelle la seconde partie de montage de gabarit a une partie évidée ou une partie saillante qui a une forme hexagonale régulière.

7. Procédé pour assembler une soupape de commutation de canal d'écoulement qui inclut un corps de soupape (10) qui a une chambre de soupape (14) et des canaux d'écoulement (11, 12, 13) en communication avec la chambre de soupape (14), un élément de soupape (20) qui est installé dans la chambre de soupape (14) et qui a un canal d'écoulement de commutation (25) dans celui-ci pour commuter entre des raccordements des canaux d'écoulement (11, 12, 13) en fonction d'une position de rotation de l'élément de soupape (20), une paire d'éléments de siège (30) qui est installée dans la chambre de soupape (14) dans un intervalle, qui intercale l'élément de soupape (20) entre ceux-ci, et qui supporte en rotation l'élément de soupape (20), et un élément d'étanchéité (31) qui est disposé entre chaque élément de siège (30) et le corps de soupape (10), le corps de soupape (10) étant agencé d'un seul tenant avec les canaux d'écoulement (11, 12, 13), et le corps de soupape (10) ayant une ouverture qui est en communication avec la chambre de soupape (14) et qui est utilisée pour insérer l'élément de soupape (20), la paire d'éléments de siège (30) et l'élément d'étanchéité (31) pendant un assemblage, la paire d'éléments de siège (30) supportant en rotation l'élément de soupape (20) de telle sorte qu'une posture d'assemblage avec un axe de rotation de l'élément de soupape (20) étant parallèle à une direction opposée de la paire d'éléments de siège (30) passe à une posture de support avec l'axe de rotation étant perpendiculaire à la direction opposée, la paire d'éléments de siège (30) supportant l'élément de soupape (20) qui a la posture de support de telle sorte que l'élément de soupape (20) peut tourner autour de l'axe de rotation, une taille de l'élément de soupape (20) dans une direction de l'axe de rotation étant plus petite qu'une taille de celui-ci dans une direction perpendiculaire à l'axe de rotation de telle sorte que les éléments de siège, l'élément d'étanchéité (31), ou les deux, sont dans un état comprimé lorsque l'élément de soupape (20) a la posture de support, et les éléments de siège (30), l'élément d'étanchéité (31), ou les deux, sont rappelés à partir de la posture de support lorsque l'élément de soupape (20) a la posture d'assemblage, une première partie de montage de gabarit qui est configurée de telle sorte que la première partie de montage de gabarit et une partie d'extrémité d'embout d'un gabarit en forme de tige s'assemblent, et de telle sorte que l'élément de soupape (20) tourne de la posture d'assemblage à la posture de support en association avec une rotation du gabarit en forme de tige étant disposé sur une surface de paroi intérieure de l'élément de soupape (20) qui est visible dans une direction perpendiculaire à la direction opposée à partir d'un emplacement situé à l'extérieur du corps de soupape (10) à travers l'ouverture ou les canaux d'écoulement (11, 12, 13) lorsque l'élément de soupape (20) a la posture d'assemblage,
l'élément de soupape (20) ayant trois ouvertures d'élément de soupape (21, 22, 23) qui sont dirigées dans la direction perpendiculaire à l'axe de rotation et qui sont reliées les unes aux autres en utilisant le canal d'écoulement de commutation (25), les trois ouvertures d'élément de soupape (21, 22, 23) étant agencées autour de l'axe de rotation dans un intervalle de 90 degrés, des diamètres de deux ouvertures d'élément de soupape (21, 23) opposées l'une à l'autre avec l'axe de rotation intercalé entre celles-ci parmi les trois ouvertures d'élément de soupape (21, 22, 23) étant plus petits qu'un diamètre de l'autre ouverture d'élément de soupape (22), la surface de paroi intérieure (26) de l'élément de soupape (20) sur lequel la première partie de montage de gabarit (27) est disposée étant opposée à l'autre ouverture d'élément de soupape (22),
le procédé comportant les étapes consistant à :
installer la paire d'éléments de siège (30) et l'élément d'étanchéité (31) dans la chambre de soupape (14) et disposer l'élément de soupape (20) entre la paire d'éléments de siège (30) de telle sorte que l'élément de soupape (20) a la posture d'assemblage ;
insérer le gabarit en forme de tige dans la direction perpendiculaire à la direction opposée à travers les canaux d'écoulement (11, 12, 13) et assembler une partie d'extrémité d'embout de celui-ci et la première partie de montage de gabarit ; et
faire tourner le gabarit en forme de tige et faire tourner l'élément de soupape (20) de la posture d'assemblage à la posture de support.

8. Procédé pour assembler une soupape de commutation de canal d'écoulement qui inclut un corps de soupape (10) qui a une chambre de soupape (14) et des canaux d'écoulement (11, 12, 13) en communication avec la chambre de soupape (14), un élément de soupape (20) qui est installé dans la chambre de soupape (14) et qui a un canal d'écoulement de commutation (25) dans celui-ci pour commuter entre des raccordements des canaux d'écoulement (11, 12, 13) en fonction d'une position de rotation de l'élément de soupape (20), une paire d'éléments de siège (30) qui est installée dans la chambre de soupape (14) dans un intervalle, qui intercale l'élément de soupape (20) entre ceux-ci, et qui supporte en rotation l'élément de soupape (20), et un élément d'étanchéité (31) qui est disposé entre chaque élément de siège (30) et le corps de soupape (10), et le corps de soupape (10) ayant une ouverture qui est en communication avec la chambre de soupape (14) et qui est utilisée pour insérer l'élément de soupape (20), la paire d'éléments de siège (30) et l'élément d'étanchéité (31) pendant un assemblage, la paire d'éléments de siège (30) supportant en rotation l'élément de soupape (20) de telle sorte qu'une posture d'assemblage avec un axe de rotation de l'élément de soupape (20) étant parallèle à une direction opposée de la paire d'éléments de siège (30) passe à une posture de support avec l'axe de rotation étant perpendiculaire à la direction opposée, la paire d'éléments de siège (30) supportant l'élément de soupape (20) qui a la posture de support de telle sorte que l'élément de soupape (20) peut tourner autour de l'axe de rotation, une taille de l'élément de soupape (20) dans une direction de l'axe de rotation étant plus petite qu'une taille de celui-ci dans une direction perpendiculaire à l'axe de rotation de telle sorte que les éléments de siège (30), l'élément d'étanchéité (31), ou les deux, sont dans un état comprimé lorsque l'élément de soupape (20) a la posture de support, et les éléments de siège (30), l'élément d'étanchéité (31), ou les deux, sont rappelés à partir de la posture de support lorsque l'élément de soupape (20) a la posture d'assemblage, une première partie de montage de gabarit qui est configurée de telle sorte que la première partie de montage de gabarit et une partie d'extrémité d'embout d'un gabarit en forme de tige s'assemblent, et de telle sorte que l'élément de soupape (20) tourne de la posture d'assemblage à la posture de support en association avec une rotation du gabarit en forme de tige étant disposé sur une surface de paroi intérieure de l'élément de soupape (20) qui est visible dans une direction perpendiculaire à la direction opposée à partir d'un emplacement situé à l'extérieur du corps de soupape (10) à travers l'ouverture ou les canaux d'écoulement (11, 12, 13) lorsque l'élément de soupape (20) a la posture d'assemblage,
l'élément de soupape (20) ayant deux ouvertures d'élément de soupape (21, 22) qui se font face dans la direction perpendiculaire à l'axe de rotation et qui sont reliées l'une à l'autre en utilisant le canal d'écoulement de commutation (25), les deux ouvertures d'élément de soupape (21, 22) étant agencées autour de l'axe de rotation dans un intervalle de 90 degrés, un diamètre d'une ouverture d'élément de soupape (21) des deux ouvertures d'élément de soupape étant plus petit qu'un diamètre de l'autre ouverture d'élément de soupape (22),
le procédé comportant les étapes consistant à :
installer la paire d'éléments de siège (30) et l'élément d'étanchéité (31) dans la chambre de soupape (14) et disposer l'élément de soupape (20) entre la paire d'éléments de siège (30) de telle sorte que l'élément de soupape (20) a la posture d'assemblage ;
insérer le gabarit en forme de tige dans la direction perpendiculaire à la direction opposée à travers l'ouverture ou les canaux d'écoulement (11, 12, 13) et assembler une partie d'extrémité d'embout de celui-ci et la première partie de montage de gabarit ; et
faire tourner le gabarit en forme de tige et faire tourner l'élément de soupape (20) de la posture d'assemblage à la posture de support.

9. Procédé pour assembler la soupape de commutation d'écoulement de canal selon la revendication 8, dans lequel la paire d'éléments de siège (30) supporte l'élément de soupape (20) qui a la posture de support de telle sorte que l'élément de soupape (20) peut tourner autour d'un axe perpendiculaire parallèle à la direction opposée, et une seconde partie de montage de gabarit qui est configurée de telle sorte que la seconde partie de montage de gabarit et la partie d'extrémité d'embout du gabarit en forme de tige s'assemblent, et de telle sorte que l'élément de soupape (20) tourne autour de l'axe perpendiculaire en association avec une rotation du gabarit en forme de tige disposé sur la surface de paroi intérieure de l'élément de soupape (20) qui est visible dans la direction opposée à partir d'un emplacement situé à l'extérieur du corps de soupape (10) à travers l'ouverture ou les canaux d'écoulement (11, 12, 13) lorsque l'élément de soupape (20) a la posture de support,
dans lequel le gabarit en forme de tige est inséré dans la direction opposée à travers les canaux d'écoulement (11, 12, 13) et la partie d'extrémité d'embout de celui-ci et la seconde partie de montage de gabarit sont assemblées, et
dans lequel le gabarit en forme de tige tourne, et l'élément de soupape (20) tourne autour de l'axe perpendiculaire.
